# EUROPEAN PATENT APPLICATION

(11) **EP 4 807 972 A1**
(43) Date of publication of application: **16.09.2026**
(21) Application number: 24888532.9
(22) Date of filing: 23.10.2024
(51) Int. Cl.: H02M 7/487, H02M 7/48

(54) **MULTI-LEVEL INVERTER**

(30) Priority: 08.11.2023 JP 2023191099
(71) Applicant: Panasonic Intellectual Property Management Co., Ltd., Kadoma-shi, Osaka 571-0057 (JP)
(72) Inventor: HEGDE, Anantha, Kadoma-shi, Osaka 571-0057 (JP); NAKAMURA, Hirokazu, Kadoma-shi, Osaka 571-0057 (JP); KABASHIMA, Takamune, Kadoma-shi, Osaka 571-0057 (JP); SUZUKI, Asamira, Kadoma-shi, Osaka 571-0057 (JP)
(74) Representative: Novagraaf International SA
(86) International application number: PCT/JP2024/037722
(87) International publication number: WO 2025/100234

(57) **Abstract**

The problem is to reduce the chances of causing not only a voltage drop at a bootstrap circuit but also a variation in potential at an intermediate potential node. A controller (6) controls a plurality of inverter circuits (1). The controller (6) includes a plurality of first gate drivers (61), a plurality of second gate drivers (62), a plurality of third gate drivers (63), a plurality of fourth gate drivers (64), a plurality of first bootstrap circuits (71), a plurality of second bootstrap circuits (72), a plurality of third bootstrap circuits (73), a power supply unit (9), and a control unit (60). The control unit (60) has: a first control mode in which a potential at an intermediate potential node (M1) is raised; a second control mode in which the potential at the intermediate potential node (M1) is lowered; and a third control mode in which the potential at the intermediate potential node (M1) is maintained.

## Description

### Technical Field

The present disclosure generally relates to a multi-level inverter, and more particularly relates to a multi-level inverter including a bootstrap circuit.

### Background Art

Patent Literature 1 discloses a three-phase, three-level neutral point multi-converter (multi-level inverter) including a bootstrap circuit.

In the three-phase, three-level neutral point multi-converter of Patent Literature 1, four switches (switching elements) are used for each phase.

The multi-level inverter of Patent Literature 1 may cause a decrease in the voltage at the bootstrap circuit. In addition, the multi-level inverter may cause a variation in the potential at an intermediate potential node.

### Citation List

### Patent Literature

Patent Literature 1: US 2015/0318788 A1

### Summary of Invention

An object of the present disclosure is to provide a multi-level inverter having the ability to reduce the chances of causing not only a voltage drop at the bootstrap circuit but also a variation in the potential at the intermediate potential node.

A multi-level inverter according to an aspect of the present disclosure includes a DC power supply unit, a plurality of inverter circuits, and a controller. The DC power supply unit includes a positive electrode, a negative electrode, and an intermediate potential node. The plurality of inverter circuits are connected between the positive electrode and the negative electrode of the DC power supply unit. The controller controls the plurality of inverter circuits. Each of the plurality of inverter circuits includes a switching circuit, a first clamping diode, and a second clamping diode. In the switching circuit, a first switching element, a second switching element, a third switching element, and a fourth switching element are connected in series to be arranged in line in this order from the positive electrode toward the negative electrode. The first clamping diode has its cathode connected to a first connection node between the first switching element and the second switching element and has its anode connected to the intermediate potential node. The second clamping diode has its anode connected to a second connection node between the third switching element and the fourth switching element and has its cathode connected to the intermediate potential node. In the switching circuit, an output node is provided between the second switching element and the third switching element. The controller includes a plurality of first gate drivers, a plurality of second gate drivers, a plurality of third gate drivers, a plurality of fourth gate drivers, a plurality of first bootstrap circuits, a plurality of second bootstrap circuits, a plurality of third bootstrap circuits, a power supply unit, and a control unit. Each of the plurality of first gate drivers drives the first switching element in a corresponding one of the plurality of inverter circuits. Each of the plurality of second gate drivers drives the second switching element in a corresponding one of the plurality of inverter circuits. Each of the plurality of third gate drivers drives the third switching element in a corresponding one of the plurality of inverter circuits. Each of the plurality of fourth gate drivers drives the fourth switching element in a corresponding one of the plurality of inverter circuits. The plurality of first bootstrap circuits are connected to the plurality of first gate drivers, respectively. The plurality of second bootstrap circuits are connected to the plurality of second gate drivers, respectively. The plurality of third bootstrap circuits are connected to the plurality of third gate drivers, respectively. The power supply unit supplies a voltage to the plurality of fourth gate drivers. The control unit has: a first control mode in which a potential at the intermediate potential node is raised; a second control mode in which the potential at the intermediate potential node is lowered; and a third control mode in which the potential at the intermediate potential node is maintained. The control unit selects a plurality of voltage vectors adjacent to a command voltage vector from a group of voltage vectors. Each of the group of voltage vectors is defined by a combination of potential levels at a plurality of the output nodes. The group of voltage vectors includes a zero vector defined by a combination in which all potential levels at the plurality of the output nodes are as high as a potential at the negative electrode. In the first control mode, the control unit replaces one first voltage vector out of two first voltage vectors with the zero vector and a second voltage vector. The two first voltage vectors belong to the plurality of voltage vectors, have a reference magnitude, and are located closest to the command voltage vector. The one first voltage vector includes the potential level at the negative electrode in the combination of the potential levels at the plurality of the output nodes. The second voltage vector has the same direction as, and twice as large a magnitude as, the one first voltage vector. In the first control mode, the control unit controls the plurality of first gate drivers, the plurality of second gate drivers, the plurality of third gate drivers, and the plurality of fourth gate drivers within a predetermined control cycle so that a synthetic vector matches the command voltage vector. The synthetic vector is a synthetic vector of: one or more voltage vectors, excluding the two first voltage vectors, out of the plurality of voltage vectors; a remaining first voltage vector including the potential level at the positive electrode in the combination of the potential levels at the plurality of the output nodes which belong to the two first voltage vectors; the zero vector; and the second voltage vector. In the second control mode, the control unit replaces the remaining first voltage vector with the zero vector and the second voltage vector. In the second control mode, the control unit controls the plurality of first gate drivers, the plurality of second gate drivers, the plurality of third gate drivers, and the plurality of fourth gate drivers within the control cycle so that a synthetic vector matches the command voltage vector. The synthetic vector is a synthetic vector of: the one or more voltage vectors; the one first voltage vector; the zero vector; and the second voltage vector. In the third control mode, the control unit controls the plurality of first gate drivers, the plurality of second gate drivers, the plurality of third gate drivers, and the plurality of fourth gate drivers within the control cycle so that a synthetic vector matches the command voltage vector. The synthetic vector is a synthetic vector of: the one or more voltage vectors; the one first voltage vector; the remaining first voltage vector; the zero vector; and the second voltage vector.

### Brief Description of Drawings

[FIG. 1] FIG. 1 is a circuit diagram of a system including a multi-level inverter according to a first embodiment;
[FIG. 2] FIG. 2 illustrates a current path in a situation where a switching circuit of the multi-level inverter is in a first switching state;
[FIG. 3] FIG. 3 illustrates a discharging path and charging path in the situation where the switching circuit of the multi-level inverter is in the first switching state;
[FIG. 4] FIG. 4 illustrates a current path in a situation where the switching circuit of the multi-level inverter is in a second switching state;
[FIG. 5] FIG. 5 illustrates a discharging path and charging path in the situation where the switching circuit of the multi-level inverter is in the second switching state;
[FIG. 6] FIG. 6 illustrates a current path in a situation where the switching circuit of the multi-level inverter is in a third switching state;
[FIG. 7] FIG. 7 illustrates a discharging path and charging path in the situation where the switching circuit of the multi-level inverter is in the third switching state;
[FIG. 8] FIG. 8 shows voltage command values for respective phases in the multi-level inverter;
[FIG. 9] FIG. 9 illustrates a group of voltage vectors with respect to the multi-level inverter;
[FIG. 10] FIG. 10 illustrates the group of voltage vectors more specifically with respect to the multi-level inverter;
[FIG. 11] FIG. 11 is a vector diagram illustrating how a control unit operates in the multi-level inverter;
[FIG. 12] FIG. 12A illustrates a command voltage vector and a first voltage vector with respect to the multi-level inverter; and FIG. 12B illustrates the command voltage vector, a zero vector, and a second voltage vector with respect to the multi-level inverter;
[FIG. 13] FIG. 13 is a timing chart illustrating switching states in respective phases of a multi-level inverter according to a comparative example;
[FIG. 14] FIG. 14 is a timing chart illustrating ON/OFF states of first to fourth switching elements of the multi-level inverter according to the comparative example;
[FIG. 15] FIG. 15 is a characteristic diagram showing how load currents of respective phases and a potential at an intermediate potential node change in a situation where a control unit controls inverter circuits of the respective phases in the multi-level inverter according to the comparative example;

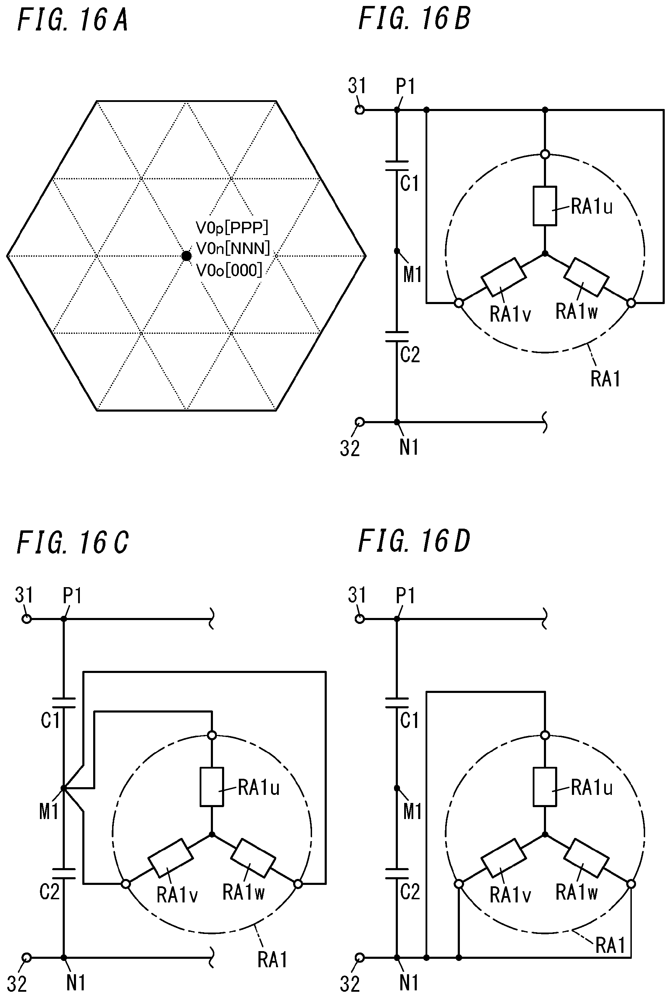

[FIG. 16] FIG. 16A illustrates a group of voltage vectors with respect to the multi-level inverter according to the first embodiment; FIG. 16B is an equivalent circuit diagram illustrating a situation where the control unit has performed control using one of the three zero vectors shown in FIG. 16A in the multi-level inverter; FIG. 16C is an equivalent circuit diagram illustrating a situation where the control unit has performed control using another zero vector in the multi-level inverter; and FIG. 16D is an equivalent circuit diagram illustrating a situation where the control unit has performed control using a remaining zero vector in the multi-level inverter;
[FIG. 17] FIG. 17A illustrates a group of voltage vectors with respect to the multi-level inverter; FIG. 17B is an equivalent circuit diagram illustrating a situation where the control unit has performed control using one of the twelve voltage vectors shown in FIG. 17A in the multi-level inverter; and FIG. 17C is an equivalent circuit diagram illustrating a situation where the control unit has performed control using another one of the twelve voltage vectors shown in FIG. 17A in the multi-level inverter;
[FIG. 18] FIG. 18A illustrates a group of voltage vectors with respect to the multi-level inverter; FIG. 18B is an equivalent circuit diagram illustrating a situation where the control unit has performed control using one of the twelve voltage vectors shown in FIG. 18A in the multi-level inverter; and FIG. 18C is an equivalent circuit diagram illustrating a situation where the control unit has performed control using another one of the twelve voltage vectors shown in FIG. 18A in the multi-level inverter;
[FIG. 19] FIG. 19 is a timing chart illustrating switching states in respective phases in a situation where the control unit of the multi-level inverter according to the first embodiment has controlled inverter circuits for respective phases in a first control mode;
[FIG. 20] FIG. 20 is a timing chart showing the ON/OFF states of first to fourth switching elements in the situation where the control unit of the multi-level inverter has controlled the inverter circuits in the first control mode;
[FIG. 21] FIG. 21 is a characteristic diagram showing how the load currents of respective phases and the potential at the intermediate potential node change in the situation where the control unit of the multi-level inverter controls the inverter circuits of the respective phases in the first control mode;
[FIG. 22] FIG. 22 is a timing chart illustrating switching states in respective phases in a situation where the control unit of the multi-level inverter has controlled the inverter circuits for the respective phases in a second control mode;
[FIG. 23] FIG. 23 is a timing chart showing the ON/OFF states of first to fourth switching elements in the situation where the control unit of the multi-level inverter has controlled the inverter circuits in the second control mode;
[FIG. 24] FIG. 24 is a characteristic diagram showing how the load currents of respective phases and the potential at the intermediate potential node change in the situation where the control unit of the multi-level inverter controls the inverter circuits of the respective phases in the second control mode;
[FIG. 25] FIG. 25 is a timing chart illustrating switching states in respective phases in a situation where the control unit of the multi-level inverter has controlled the inverter circuits for the respective phases in a third control mode;
[FIG. 26] FIG. 26 is a timing chart showing the ON/OFF states of first to fourth switching elements in the situation where the control unit of the multi-level inverter has controlled the inverter circuits in the third control mode;
[FIG. 27] FIG. 27 is a characteristic diagram showing how the load currents of respective phases and the potential at the intermediate potential node change in the situation where the control unit of the multi-level inverter controls the inverter circuits of the respective phases in the third control mode; and
[FIG. 28] FIG. 28 is a circuit diagram of a system including a multi-level inverter according to a second embodiment.

### Description of Embodiments

### (First embodiment)

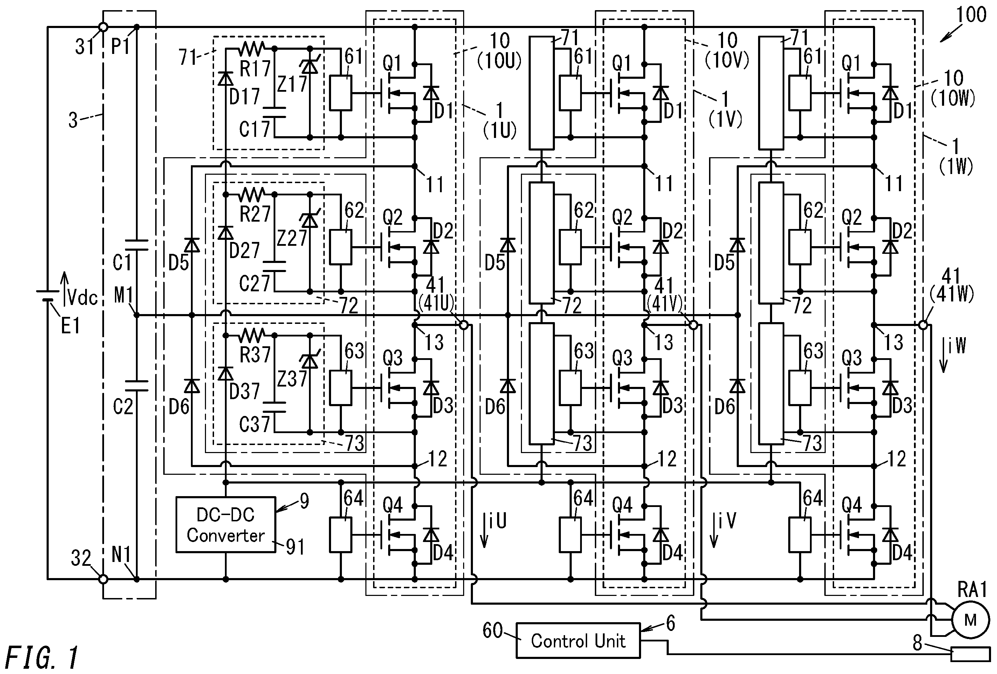

A multi-level inverter 100 according to a first embodiment will now be described with reference to FIGS. 1-12 and FIGS. 16A-27.

### (1) Overview

The multi-level inverter 100 may include, for example, a DC power supply unit 3, a plurality of (e.g., three) inverter circuits 1, and a controller 6 as shown in FIG. 1. The DC power supply unit 3 includes a positive electrode P1, a negative electrode N1, and an intermediate potential node M1. As used herein, the "intermediate potential node M1" refers to a node at which the potential is ideally intermediate between the potential at the positive electrode P1 of the DC power supply unit 3 and the potential at the negative electrode N1 thereof. In the first embodiment, supposing the voltage across the DC power supply unit 3 is Vdc (of 400 V, for example), the potential at the positive electrode P1 is approximately equal to Vdc, the potential at the negative electrode N1 is approximately equal to 0 V, and the potential at the intermediate potential node M1 is approximately equal to Vdc/2.

The plurality of inverter circuits 1 are connected between the positive electrode P1 and the negative electrode N1 of the DC power supply unit 3. The controller 6 controls the plurality of inverter circuits 1.

The multi-level inverter 100 is a diode-clamping three-level three-phase inverter. In the multi-level inverter 100, each of the plurality of inverter circuits 1 has an output terminal 41. In the multi-level inverter 100, an AC load RA1 is connected to the plurality of output terminals (AC terminals) 41. The AC load RA1 may be, for example, a three-phase servo motor. In the multi-level inverter 100, one of the plurality of inverter circuits 1 is an inverter circuit 1U for outputting a U-phase voltage, another one of the plurality of inverter circuits 1 is an inverter circuit 1V for outputting a V-phase voltage, and the other one of the plurality of inverter circuits 1 is an inverter circuit 1W for outputting a W-phase voltage.

Each of the plurality of inverter circuits 1 includes a first clamping diode D5 and a second clamping diode D6. In the multi-level inverter 100, the potential at the intermediate potential node M1 is clamped by the first clamping diode D5 and the second clamping diode D6 of each inverter circuit 1.

Each of the plurality of inverter circuits 1 includes a switching circuit 10. Each switching circuit 10 includes a first switching element Q1, a second switching element Q2, a third switching element Q3, and a fourth switching element Q4. In the switching circuit 10, the first switching element Q1, the second switching element Q2, the third switching element Q3, and the fourth switching element Q4 are connected in series to be arranged in line in this order from the positive electrode P1 toward the negative electrode N1.

The first clamping diode D5 has its cathode connected to a first connection node 11 between the first switching element Q1 and the second switching element Q2 and has its anode connected to the intermediate potential node M1. The second clamping diode D6 has its anode connected to a second connection node 12 between the third switching element Q3 and the fourth switching element Q4 and has its cathode connected to the intermediate potential node M1.

In each of the plurality of inverter circuits 1, the switching circuit 10 includes a first diode D1, a second diode D2, a third diode D3, and a fourth diode D4.

The first diode D1 is connected to the first switching element Q1 in anti-parallel. The second diode D2 is connected to the second switching element Q2 in anti-parallel. The third diode D3 is connected to the third switching element Q3 in anti-parallel. The fourth diode D4 is connected to the fourth switching element Q4 in anti-parallel.

The controller 6 includes a plurality of (e.g., three) first gate drivers 61, a plurality of (e.g., three) second gate drivers 62, a plurality of (e.g., three) third gate drivers 63, and a plurality of (e.g., three) fourth gate drivers 64. In addition, the controller 6 further includes a plurality of (e.g., three) first bootstrap circuits 71, a plurality of (e.g., three) second bootstrap circuits 72, a plurality of (e.g., three) third bootstrap circuits 73, a power supply unit 9, and a control unit 60.

Each of the plurality of first gate drivers 61 drives the first switching element Q1 of a corresponding one of the plurality of inverter circuits 1. Each of the plurality of second gate drivers 62 drives the second switching element Q2 of a corresponding one of the plurality of inverter circuits 1. Each of the plurality of third gate drivers 63 drives the third switching element Q3 of a corresponding one of the plurality of inverter circuits 1. Each of the plurality of fourth gate drivers 64 drives the fourth switching element Q4 of a corresponding one of the plurality of inverter circuits 1.

The plurality of first bootstrap circuits 71 are connected to the plurality of first gate drivers 61, respectively. The plurality of first bootstrap circuits 71 are provided one to one for the plurality of first gate drivers 61. Each of the plurality of first bootstrap circuits 71 supplies a voltage to a corresponding one of the plurality of first gate drivers 61.

The plurality of second bootstrap circuits 72 are connected to the plurality of second gate drivers 62, respectively. The plurality of second bootstrap circuits 72 are provided one to one for the plurality of second gate drivers 62. Each of the plurality of second bootstrap circuits 72 supplies a voltage to a corresponding one of the plurality of second gate drivers 62.

The plurality of third bootstrap circuits 73 are connected to the plurality of third gate drivers 63, respectively. The plurality of third bootstrap circuits 73 are provided one to one for the plurality of third gate drivers 63. Each of the plurality of third bootstrap circuits 73 supplies a voltage to a corresponding one of the plurality of third gate drivers 63.

The power supply unit 9 supplies a voltage to the plurality of fourth gate drivers 64.

The control unit 60 controls the plurality of first gate drivers 61, the plurality of second gate drivers 62, the plurality of third gate drivers 63, and the plurality of fourth gate drivers 64.

### (2) Details of multi-level inverter

As shown in FIG. 1, the DC power supply unit 3 includes a first capacitor C1 and a second capacitor C2. In the DC power supply unit 3, the first capacitor C1 and the second capacitor C2 are connected in series. In the DC power supply unit 3, a first end of the first capacitor C1 is connected to a first DC terminal 31, a second end of the first capacitor C1 is connected to a first end of the second capacitor C2, and a second end of the second capacitor C2 is connected to a second DC terminal 32. In the DC power supply unit 3, a connection node between the first capacitor C1 and the second capacitor C2 is the intermediate potential node M1. The DC power supply unit 3 further includes the first DC terminal 31 connected to the positive electrode P1 and the second DC terminal 32 connected to the negative electrode N1. A DC voltage source E1, for example, may be connected between the first DC terminal 31 and the second DC terminal 32. In that case, an output voltage Vdc of the DC voltage source E1 is applied to between the positive electrode P1 and negative electrode N1 of the DC power supply unit 3. Note that the capacitance of the second capacitor C2 is equal to the capacitance of the first capacitor C1. As used herein, the expression "the capacitance of the second capacitor C2 is equal to the capacitance of the first capacitor C1" refers to not only a situation where the capacitance of the second capacitor C2 is perfectly equal to the capacitance of the first capacitor C1 but also a situation where the capacitance of the second capacitor C2 is equal to or greater than 95% and equal to or less than 105% of the capacitance of the first capacitor C1.

In the following description, as for the plurality of switching circuits 10, the switching circuit 10 included in the inverter circuit 1U will be hereinafter referred to as a "switching circuit 10U," the switching circuit 10 included in the inverter circuit 1V will be hereinafter referred to as a "switching circuit 10V," and the switching circuit 10 included in the inverter circuit 1W will be hereinafter referred to as a "switching circuit 10W" for the sake of convenience of description. In the same way, as for the plurality of output terminals 41, the output terminal 41 included in the inverter circuit 1U will be hereinafter referred to as an "output terminal 41U," the output terminal 41 included in the inverter circuit 1V will be hereinafter referred to as an "output terminal 41V," and the output terminal 41 included in the inverter circuit 1W will be hereinafter referred to as an "output terminal 41W." In addition, in the following description, as for each of load currents iU, iV, and iW respectively flowing through the U-, V-, and W-phases of the AC load RA1, if the load current iU, iV, and iW flows in the direction indicated by a corresponding one of the arrows shown in FIG. 1, then the polarity of the load current iU, iV, and iW is supposed to be positive. On the other hand, if the load current iU, iV, and iW flows in the direction opposite from the one indicated by a corresponding one of the arrows shown in FIG. 1, then the polarity of the load current iU, iV, and iW is supposed to be negative.

In each switching circuit 10, the first switching element Q1, the second switching element Q2, the third switching element Q3, and the fourth switching element Q4 each have a control terminal, a first main terminal, and a second main terminal. The first switching element Q1, the second switching element Q2, the third switching element Q3, and the fourth switching element Q4 of each switching circuit 10 may be, for example, MOSFETs. Thus, in each switching circuit 10, the control terminal, the first main terminal, and the second main terminal of each of the first switching element Q1, the second switching element Q2, the third switching element Q3, and the fourth switching element Q4 are a gate terminal, a drain terminal, and a source terminal, respectively. In each switching circuit 10, the MOSFETs serving as the first switching element Q1, the second switching element Q2, the third switching element Q3, and the fourth switching element Q4 may be, for example, normally OFF n-channel MOSFETs. Note that the MOSFETs may be, for example, Si-based MOSFETs or SiC-based MOSFETs.

In each switching circuit 10, the control terminal of the first switching element Q1 is connected to a corresponding one of the plurality of first gate drivers 61. Also, in each switching circuit 10, the control terminal of the second switching element Q2 is connected to a corresponding one of the plurality of second gate drivers 62. Furthermore, in each switching circuit 10, the control terminal of the third switching element Q3 is connected to a corresponding one of the plurality of third gate drivers 63. Furthermore, in each switching circuit 10, the control terminal of the fourth switching element Q4 is connected to a corresponding one of the plurality of fourth gate drivers 64.

In each switching circuit 10, the first main terminal of the first switching element Q1 is connected to the positive electrode P1 of the DC power supply unit 3, and the second main terminal of the first switching element Q1 is connected to the first main terminal of the second switching element Q2. Also, in each switching circuit 10, the second main terminal of the second switching element Q2 is connected to the first main terminal of the third switching element Q3. Furthermore, in each switching circuit 10, the second main terminal of the third switching element Q3 is connected to the first main terminal of the fourth switching element Q4 and the second main terminal of the fourth switching element Q4 is connected to the negative electrode N1 of the DC power supply unit 3.

In the inverter circuit 1U, the output node (third connection node) 13 between the second switching element Q2 and the third switching element Q3 of the switching circuit 10U is connected to the output terminal 41U. In the inverter circuit 1V, the output node (third connection node) 13 between the second switching element Q2 and the third switching element Q3 of the switching circuit 10V is connected to the output terminal 41V. In the inverter circuit 1W, the output node (third connection node) 13 between the second switching element Q2 and the third switching element Q3 of the switching circuit 10W is connected to the output terminal 41W. To the output node 13 of the inverter circuit 1U, connected, via the output terminal 41U, is the U-phase load RA1u (refer to FIG. 16B) of the AC load RA1, for example. On the other hand, to the output node 13 of the inverter circuit 1V, connected, via the output terminal 41V, is the V-phase load RA1v (refer to FIG. 16B) of the AC load RA1, for example. Furthermore, to the output node 13 of the inverter circuit 1W, connected, via the output terminal 41W, is the W-phase load RA1w (refer to FIG. 16B) of the AC load RA1, for example.

In each inverter circuit 1, the cathode of the first clamping diode D5 is connected to the first connection node 11 between the first switching element Q1 and the second switching element Q2, while the anode of the first clamping diode D5 is connected to the intermediate potential node M1 of the DC power supply unit 3. On the other hand, the cathode of the second clamping diode D6 is connected to the intermediate potential node M1, while the anode of the second clamping diode D6 is connected to the second connection node 12 between the third switching element Q3 and the fourth switching element Q4.

In each switching circuit 10, the anode of the first diode D1 is connected to the second main terminal (source terminal) of the first switching element Q1, and the cathode of the first diode D1 is connected to the first main terminal (drain terminal) of the first switching element Q1. Also, in each switching circuit 10, the anode of the second diode D2 is connected to the second main terminal (source terminal) of the second switching element Q2, and the cathode of the second diode D2 is connected to the first main terminal (drain terminal) of the second switching element Q2. Furthermore, in each switching circuit 10, the anode of the third diode D3 is connected to the second main terminal (source terminal) of the third switching element Q3, and the cathode of the third diode D3 is connected to the first main terminal (drain terminal) of the third switching element Q3. Furthermore, in each switching circuit 10, the anode of the fourth diode D4 is connected to the second main terminal (source terminal) of the fourth switching element Q4, and the cathode of the fourth diode D4 is connected to the first main terminal (drain terminal) of the fourth switching element Q4.

In each switching circuit 10, the first diode D1 may be replaced with a parasitic diode of a MOSFET serving as the first switching element Q1. Also, in each switching circuit 10, the second diode D2 may be replaced with a parasitic diode of a MOSFET serving as the second switching element Q2. Furthermore, in each switching circuit 10, the third diode D3 may be replaced with a parasitic diode of a MOSFET serving as the third switching element Q3. Furthermore, in each switching circuit 10, the fourth diode D4 may be replaced with a parasitic diode of a MOSFET serving as the fourth switching element Q4.

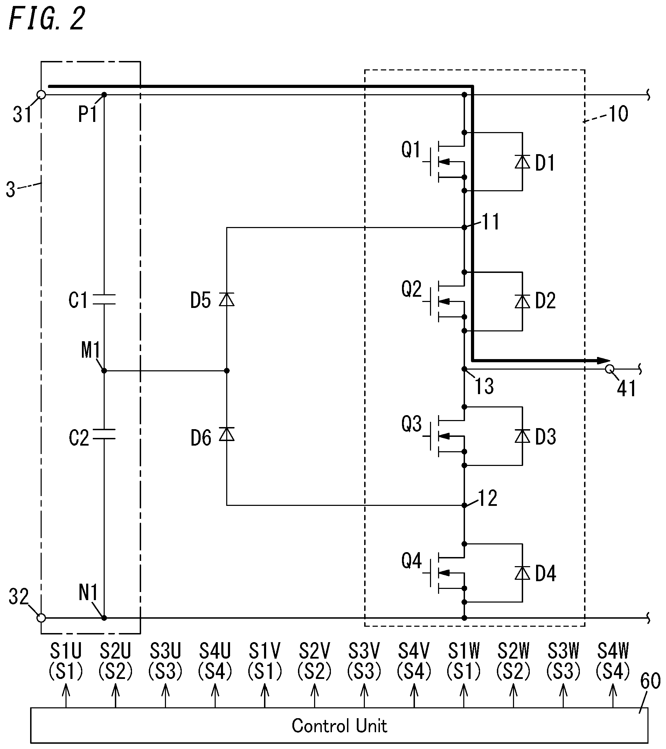

The plurality of first gate drivers 61 are provided one to one for the plurality of first switching elements Q1. Each of the plurality of first gate drivers 61 is connected to the control terminal of a corresponding one of the first switching elements Q1. Each of the plurality of first gate drivers 61 drives a corresponding one of the first switching elements Q1. The plurality of first gate drivers 61 are connected to the control unit 60. The control unit 60 outputs a plurality of first control signals S1 (refer to FIG. 2) which are associated one to one with the plurality of first gate drivers 61. Each of the plurality of first gate drivers 61 controls the ON/OFF states of the corresponding first switching element Q1 in accordance with the first control signal S1 supplied thereto.

The plurality of second gate drivers 62 are provided one to one for the plurality of second switching elements Q2. Each of the plurality of second gate drivers 62 is connected to the control terminal of a corresponding one of the second switching elements Q2. Each of the plurality of second gate drivers 62 drives a corresponding one of the second switching elements Q2. The plurality of second gate drivers 62 are connected to the control unit 60. The control unit 60 outputs a plurality of second control signals S2 (refer to FIG. 2) which are associated one to one with the plurality of second gate drivers 62. Each of the plurality of second gate drivers 62 controls the ON/OFF states of the corresponding second switching element Q2 in accordance with the second control signal S2 supplied thereto.

The plurality of third gate drivers 63 are provided one to one for the plurality of third switching elements Q3. Each of the plurality of third gate drivers 63 is connected to the control terminal of a corresponding one of the third switching elements Q3. Each of the plurality of third gate drivers 63 drives a corresponding one of the third switching elements Q3. The plurality of third gate drivers 63 are connected to the control unit 60. The control unit 60 outputs a plurality of third control signals S3 (refer to FIG. 2) which are associated one to one with the plurality of third gate drivers 63. Each of the plurality of third gate drivers 63 controls the ON/OFF states of the corresponding third switching element Q3 in accordance with the third control signal S3 supplied thereto.

The plurality of fourth gate drivers 64 are provided one to one for the plurality of fourth switching elements Q4. Each of the plurality of fourth gate drivers 64 is connected to the control terminal of a corresponding one of the fourth switching elements Q4. Each of the plurality of fourth gate drivers 64 drives a corresponding one of the fourth switching elements Q4. The plurality of fourth gate drivers 64 are connected to the control unit 60. The control unit 60 outputs a plurality of fourth control signals S4 (refer to FIG. 2) which are associated one to one with the plurality of fourth gate drivers 64. Each of the plurality of fourth gate drivers 64 controls the ON/OFF states of the corresponding fourth switching element Q4 in accordance with the fourth control signal S4 supplied thereto.

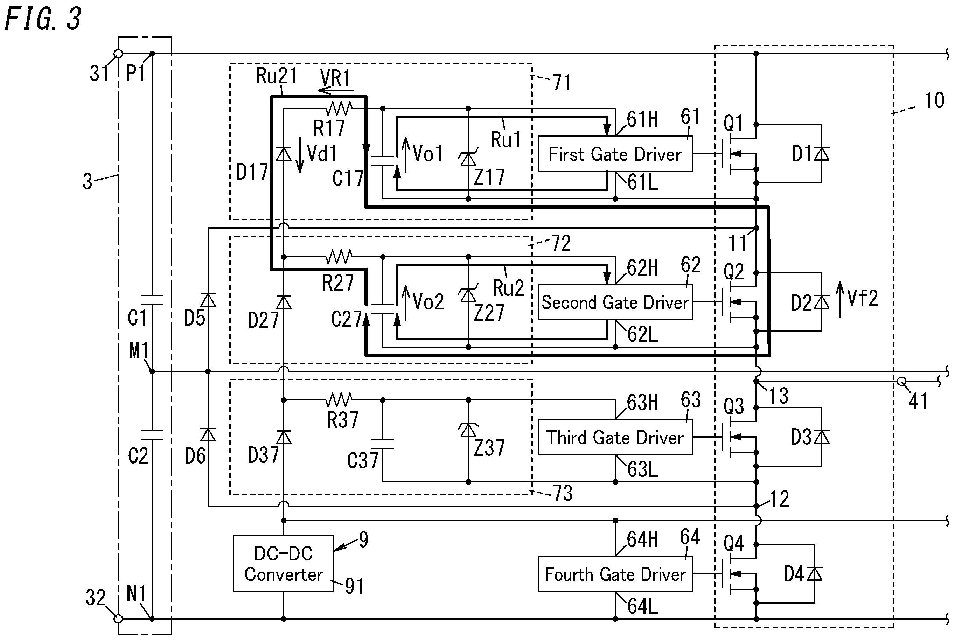

The plurality of first bootstrap circuits 71 are provided one to one for the plurality of first gate drivers 61. Each of the plurality of first bootstrap circuits 71 supplies a voltage to a corresponding one of the first gate drivers 61. Each of the plurality of first bootstrap circuits 71 includes a diode D17, a resistor R17, and a capacitor C17 (hereinafter referred to as a "boosting capacitor C17"). In each of the plurality of first bootstrap circuits 71, the anode of the diode D17 is connected to the positive-side terminal of the power supply unit 9 and the cathode of the diode D17 is connected to a first end of the capacitor C17 via the resistor R17. The first end of the capacitor C17 is connected to a higher-potential power supply terminal 61H (refer to FIG. 3) of the corresponding first gate driver 61. A second end of the capacitor C17 is connected to a lower-potential power supply terminal 61L (refer to FIG. 3) of the corresponding first gate driver 61. The first bootstrap circuit 71 supplies, to the corresponding first gate driver 61, a voltage required for the first gate driver 61 to turn ON the first switching element Q1. Each of the plurality of first bootstrap circuits 71 further includes a Zener diode Z17 connected to the capacitor C17 in parallel.

The plurality of second bootstrap circuits 72 are provided one to one for the plurality of second gate drivers 62. Each of the plurality of second bootstrap circuits 72 supplies a voltage to a corresponding one of the second gate drivers 62. Each of the plurality of second bootstrap circuits 72 includes a diode D27, a resistor R27, and a capacitor C27 (hereinafter referred to as a "boosting capacitor C27"). In each of the second bootstrap circuits 72, the anode of the diode D27 is connected to the positive-side terminal of the power supply unit 9 and the cathode of the diode D27 is connected to a first end of the capacitor C27 via the resistor R27. The first end of the capacitor C27 is connected to a higher-potential power supply terminal 62H (refer to FIG. 3) of the corresponding second gate driver 62. A second end of the capacitor C27 is connected to a lower-potential power supply terminal 62L (refer to FIG. 3) of the corresponding second gate driver 62. The second bootstrap circuit 72 supplies, to the corresponding second gate driver 62, a voltage required for the second gate driver 62 to turn ON the second switching element Q2. Each of the plurality of second bootstrap circuits 72 further includes a Zener diode Z27 connected to the capacitor C27 in parallel.

The plurality of third bootstrap circuits 73 are provided one to one for the plurality of third gate drivers 63. Each of the plurality of third bootstrap circuits 73 supplies a voltage to a corresponding one of the third gate drivers 63. Each of the plurality of third bootstrap circuits 73 includes a diode D37, a resistor R37, and a capacitor C37 (hereinafter referred to as a "boosting capacitor C37"). In each of the third bootstrap circuits 73, the anode of the diode D37 is connected to the positive-side terminal of the power supply unit 9 and the cathode of the diode D37 is connected to a first end of the capacitor C37 via the resistor R37. The first end of the capacitor C37 is connected to a higher-potential power supply terminal 63H (refer to FIG. 3) of the corresponding third gate driver 63. A second end of the capacitor C37 is connected to a lower-potential power supply terminal 63L (refer to FIG. 3) of the corresponding third gate driver 63. The third bootstrap circuit 73 supplies, to the corresponding third gate driver 63, a voltage required for the third gate driver 63 to turn ON the third switching element Q3. Each of the plurality of third bootstrap circuits 73 further includes a Zener diode Z37 connected to the capacitor C37 in parallel.

The power supply unit 9 supplies a voltage to the plurality of (three) first bootstrap circuits 71, the plurality of (three) second bootstrap circuits 72, the plurality of (three) third bootstrap circuits 73, and the plurality of (three) fourth gate drivers 64. The power supply unit 9 may be, for example, a DC power supply including an insulating DC-DC converter 91. The positive-side terminal of the power supply unit 9 is connected to the higher-potential power supply terminal 64H (refer to FIG. 3) of each of the plurality of fourth gate drivers 64 and the negative-side terminal of the power supply unit 9 is connected to the lower-potential power supply terminal 64L (refer to FIG. 3) of each of the plurality of fourth gate drivers 64.

The control unit 60 controls the plurality of first gate drivers 61, the plurality of second gate drivers 62, the plurality of third gate drivers 63, and the plurality of fourth gate drivers 64. This allows the control unit 60 to control the plurality of first switching elements Q1, the plurality of second switching elements Q2, the plurality of third switching elements Q3, and the plurality of fourth switching elements Q4. The agent that performs the functions of the control unit 60 includes a computer system. The computer system includes a single or a plurality of computers. The computer system includes a processor and a memory as principal hardware components thereof. The computer system serves as the agent that performs the functions of the control unit 60 according to the present disclosure by making the processor execute a program stored in the memory of the computer system. The program may be stored in advance in the memory of the computer system. Alternatively, the program may also be downloaded through a telecommunications line or be distributed after having been stored in some non-transitory storage medium such as a memory card, an optical disc, or a hard disk drive (magnetic disk), any of which is readable for the computer system. The processor of the computer system may be made up of a single or a plurality of electronic circuits including a semiconductor integrated circuit (IC) or a large-scale integrated circuit (LSI). Those electronic circuits may be either integrated together on a single chip or distributed on multiple chips, whichever is appropriate. Those multiple chips may be aggregated together in a single device or distributed in multiple devices without limitation.

The control unit 60 outputs a plurality of (e.g., three) first control signals S1 (refer to FIG. 2) for controlling the plurality of (e.g., three) first switching elements Q1, a plurality of (three) second control signals S2 (refer to FIG. 2) for controlling the plurality of (e.g., three) second switching elements Q2, a plurality of (e.g., three) third control signals S3 (refer to FIG. 2) for controlling the plurality of third switching elements Q3, and a plurality of (e.g., three) fourth control signals S4 (refer to FIG. 2) for controlling the plurality of (e.g., three) fourth switching elements Q4. Note that in FIG. 2, only one of the three inverter circuits 1 is shown with illustration of the other two inverter circuits 1 omitted. Also, in FIG. 2, illustration of the plurality of first gate drivers 61, the plurality of second gate drivers 62, the plurality of third gate drivers 63, the plurality of fourth gate drivers 64, the plurality of first bootstrap circuits 71, the plurality of second bootstrap circuits 72, the plurality of third bootstrap circuits 73, and the power supply unit 9 is omitted. In the same way, in FIG. 3, only one of the three inverter circuits 1 is shown with illustration of the other two inverter circuits 1 omitted. Also, in FIG. 3, illustration of the other two first gate drivers 61, the other two second gate drivers 62, the other two third gate drivers 63, the other two fourth gate drivers 64, the other two first bootstrap circuits 71, the other two second bootstrap circuits 72, and the other two third bootstrap circuits 73 is omitted.

The three first control signals S1 are a first control signal S1U for controlling the first switching element Q1 of the switching circuit 10U, a first control signal S1V for controlling the first switching element Q1 of the switching circuit 10V, and a first control signal S1W for controlling the first switching element Q1 of the switching circuit 10W.

The three second control signals S2 are a second control signal S2U for controlling the second switching element Q2 of the switching circuit 10U, a second control signal S2V for controlling the second switching element Q2 of the switching circuit 10V, and a second control signal S2W for controlling the second switching element Q2 of the switching circuit 10W.

The three third control signals S3 are a third control signal S3U for controlling the third switching element Q3 of the switching circuit 10U, a third control signal S3V for controlling the third switching element Q3 of the switching circuit 10V, and a third control signal S3W for controlling the third switching element Q3 of the switching circuit 10W.

The three fourth control signals S4 are a fourth control signal S4U for controlling the fourth switching element Q4 of the switching circuit 10U, a fourth control signal S4V for controlling the fourth switching element Q4 of the switching circuit 10V, and a fourth control signal S4W for controlling the fourth switching element Q4 of the switching circuit 10W.

Each of the plurality of first control signals S1, the plurality of second control signals S2, the plurality of third control signals S3, and the plurality of fourth control signals S4 may be, for example, a signal having a potential level which alternates between a first potential level (hereinafter referred to as a "low level") and a second potential level (hereinafter referred to as a "high level") higher than the first potential level. The first potential level may be 0 V, for example, and the second potential level is a potential level higher than a gate threshold voltage of the MOSFET. That is to say, in each of the plurality of control signals (including the plurality of first control signals S1, the plurality of second control signals S2, the plurality of third control signals S3, and the plurality of fourth control signals S4), the first potential level is a potential level for causing the switching element associated with the control signal to be in OFF state and the second potential level is a potential level for causing the switching element associated with the control signal to be in ON state.

Each of the plurality of first switching elements Q1 is in ON state when its associated first control signal S1 has high level and is in OFF state when its associated first control signal S1 has low level. Each of the plurality of second switching elements Q2 is in ON state when its associated second control signal S2 has high level and is in OFF state when its associated second control signal S2 has low level. Each of the plurality of third switching elements Q3 is in ON state when its associated third control signal S3 has high level and is in OFF state when its associated third control signal S3 has low level. Each of the plurality of fourth switching elements Q4 is in ON state when its associated fourth control signal S4 has high level and is in OFF state when its associated fourth control signal S4 has low level.

In the multi-level inverter 100, each of the plurality of inverter circuits 1 is controlled toward one of a first switching state, a second switching state, or a third switching state. That is to say, in the multi-level inverter 100, in each of the three inverter circuits 1U, 1V, and 1W, the switching state of the switching circuit 10 thereof is controlled toward any one of the first, second, and third switching states. The first, second, and third switching states are different from each other in the combination of ON/OFF states of the first to fourth switching elements Q1-Q4. In each of the plurality of inverter circuits 1, its output voltage in the first switching state, its output voltage in the second switching state, and its output voltage in the third switching state are different from each other. That is to say, in each of the plurality of inverter circuits 1, the potential level of the output voltage changes in three levels according to the states of the first to fourth switching elements Q1-Q4. Note that as for the output voltages of the plurality of inverter circuits 1, the output voltage of the U-phase inverter circuit 1U, the output voltage of the V-phase inverter circuit 1V, and the output voltage of the W-phase inverter circuit 1W have mutually different phases.

The first switching state herein refers to a combination which causes both the first switching element Q1 and the second switching element Q2 to be in ON state and causes both the third switching element Q3 and the fourth switching element Q4 to be in OFF state. When controlled toward the first switching state, each of the plurality of inverter circuits 1 may deliver an output voltage having a potential level at the positive electrode P1 of the DC power supply unit 3. In each of the plurality of inverter circuits 1 in the first switching state, the potential at the output node 13 is as high as the potential level (e.g., Vdc) at the positive electrode P1 of the DC power supply unit 3.

The second switching state herein refers to a combination which causes both the first switching element Q1 and the fourth switching element Q4 to be in OFF state and causes both the second switching element Q2 and the third switching element Q3 to be in ON state. When controlled toward the second switching state, each of the plurality of inverter circuits 1 may deliver an output voltage having a potential level at the intermediate potential node M1 of the DC power supply unit 3. In each of the plurality of inverter circuits 1 in the second switching state, the potential at the output node 13 is as high as the potential level (e.g., Vdc/2) at the intermediate potential node M1.

The third switching state herein refers to a combination which causes both the first switching element Q1 and the second switching element Q2 to be in OFF state and causes both the third switching element Q3 and the fourth switching element Q4 to be in ON state. When controlled toward the third switching state, each of the plurality of inverter circuits 1 may deliver an output voltage having a potential level at the negative electrode N1 of the DC power supply unit 3. In each of the plurality of inverter circuits 1 in the third switching state, the potential at the output node 13 is as high as the potential level (e.g., 0) at the negative electrode N1 of the DC power supply unit 3.

When the switching circuit 10 of each inverter circuit 1 is in the first switching state, a current flows along a path which passes through the positive electrode P1 of the DC power supply unit 3, the first switching element Q1, the second switching element Q2, the output node 13, and the output terminal 41 in this order as indicated by the bold-line arrow shown in FIG. 2 to make the voltage value of the output voltage for the AC load RA1 (refer to FIG. 1) approximately equal to Vdc.

In addition, when the switching circuit 10 of the inverter circuit 1 is in the first switching state, a voltage required for the first gate driver 61 to turn ON the first switching element Q1 is supplied from the capacitor C17 of the first bootstrap circuit 71 to the first gate driver 61. Thus, electricity is discharged from the capacitor C17 of the first bootstrap circuit 71 through a discharging path Ru1 which passes through the capacitor C17, the higher-potential power supply terminal 61H of the first gate driver 61, the lower-potential power supply terminal 61L of the first gate driver 61, and the capacitor C17 in this order as shown in FIG. 3. As a result, in the first bootstrap circuit 71, the voltage across the capacitor C17 falls with the passage of time.

Furthermore, when the switching circuit 10 of the inverter circuit 1 is in the first switching state, a voltage required for the second gate driver 62 to turn ON the second switching element Q2 is supplied from the capacitor C27 of the second bootstrap circuit 72 to the second gate driver 62. Thus, electricity is discharged from the capacitor C27 of the second bootstrap circuit 72 through a discharging path Ru2 which passes through the capacitor C27, the higher-potential power supply terminal 62H of the second gate driver 62, the lower-potential power supply terminal 62L of the second gate driver 62, and the capacitor C27 in this order. As a result, in the second bootstrap circuit 72, the voltage across the capacitor C27 falls with the passage of time.

Furthermore, supposing the voltage across the capacitor C17 is Vo1, the voltage across the capacitor C27 is Vo2, the voltage across the diode D17 is Vd1, the voltage across the resistor R17 is VR1, and the voltage across the second switching element Q2 is Vf2 as shown in FIG. 3, while the switching circuit 10 of each inverter circuit 1 is in the first switching state, the capacitor C17 is charged with the electric charges in the capacitor C27 if a first condition is satisfied. The first condition is Vo2 > (Vo1 + Vd1 + VR1 + Vf2). The charging path Ru21 for charging the capacitor C17 with the electric charges in the capacitor C27 is a path which passes through the capacitor C27, the resistor R27, the diode D17, the resistor R17, the capacitor C1, the first connection node 11, the second switching element Q2, and the capacitor C27 in this order.

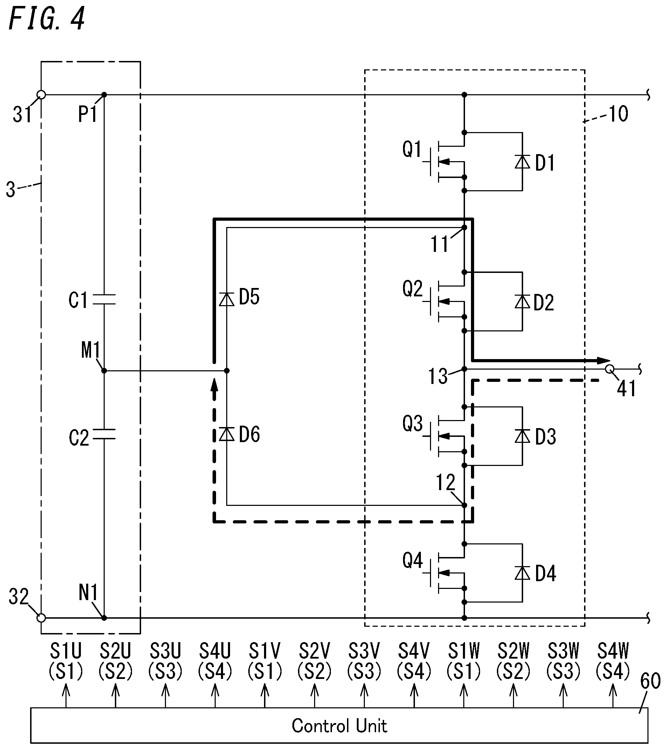

On the other hand, while the switching circuit 10 of the inverter circuit 1 is in the second switching state, a current flows along the path (i.e., the path indicated by the bold solid-line arrow) which passes through, for example, the intermediate potential node M1 of the DC power supply unit 3, the first clamping diode D5, the second switching element Q2, the output node 13, and the output terminal 41 in this order as shown in FIG. 4, for example, to make the voltage value of the output voltage for the AC load RA1 approximately equal to Vdc/2. More specifically, when the switching circuits 10U, 10V, and 10W are in the second switching state, the third switching state, and the third switching state, respectively, the current flows along a path which passes through the intermediate potential node M1 of the DC power supply unit 3, the first clamping diode D5, the second switching element Q2 of the switching circuit 10U, the output node 13, and the output terminal 41 in this order.

Alternatively, while the switching circuit 10 of the inverter circuit 1 is in the second switching state, a current may also flow through a path which passes through, for example, the output terminal 41, the output node 13, the third switching element Q3, the second connection node 12, and the second clamping diode D6 in this order (i.e., the path indicated by the bold dashed-line arrow) as shown in FIG. 4, to make the voltage value of the output voltage for the AC load RA1 approximately equal to Vdc/2. More specifically, when the switching circuits 10U, 10V, and 10W are in the second switching state, the second switching state, and the first switching state, respectively, the current flows along a path which passes through the output terminal 41 of the inverter circuit 1U, the output node 13, the third switching element Q3, the second connection node 12, and the second clamping diode D6 in this order (i.e., the path indicated by the bold dashed-line arrow) to make the voltage value of the output voltage for the AC load RA1 approximately equal to Vdc/2.

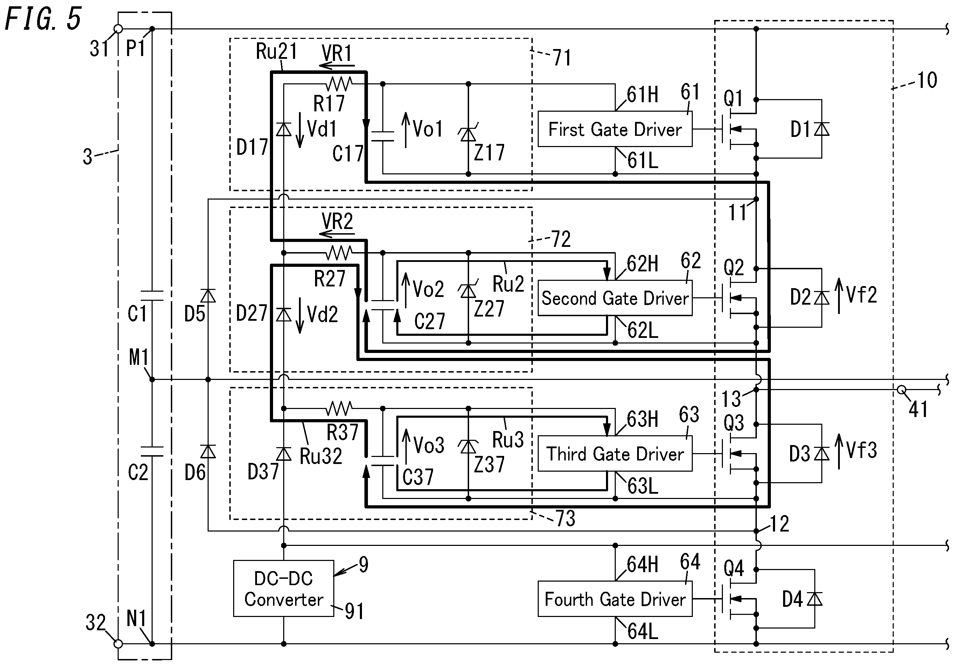

Furthermore, when the switching circuit 10 of the inverter circuit 1 is in the second switching state, a voltage required for the second gate driver 62 to turn ON the second switching element Q2 is supplied from the capacitor C27 of the second bootstrap circuit 72 to the second gate driver 62. Thus, electricity is discharged from the capacitor C27 of the second bootstrap circuit 72 through a discharging path Ru2 which passes through the capacitor C27, the higher-potential power supply terminal 62H of the second gate driver 62, the lower-potential power supply terminal 62L of the second gate driver 62, and the capacitor C27 in this order as shown in FIG. 5. In addition, when the switching circuit 10 of the inverter circuit 1 is in the second switching state, a voltage required for the third gate driver 63 to turn ON the third switching element Q3 is supplied from the capacitor C37 of the third bootstrap circuit 73 to the third gate driver 63. Thus, electricity is discharged from the capacitor C37 of the third bootstrap circuit 73 through a discharging path Ru3 which passes through the capacitor C37, the higher-potential power supply terminal 63H of the third gate driver 63, the lower-potential power supply terminal 63L of the third gate driver 63, and the capacitor C37 in this order.

Furthermore, supposing the voltages across the capacitors C17, C27, C37 are Vo1, Vo2, Vo3, respectively, the voltages across the resistors R17, R27 are VR1, VR2, respectively, and the voltages across the second switching element Q2 and the third switching element Q3 are Vf2, Vf3, respectively, as shown in FIG. 5, while the switching circuit 10 of the inverter circuit 1 is in the second switching state, the capacitor C27 is charged with electric charges in the capacitor C37 if a second condition is satisfied and the capacitor C17 is charged with electric charges in the capacitor C27 if a third condition is satisfied. The second condition is Vo3 > (Vo2 + Vd2 + VR2 + Vf3). The third condition is Vo2 > (Vo1 + Vd1 + VR1 + Vf2). The charging path Ru32 for charging the capacitor C27 with the electric charges in the capacitor C37 is a path which passes through the capacitor C37, the resistor R37, the diode D27, the resistor R27, the capacitor C27, the output node 13, the third switching element Q3, and the capacitor C37 in this order. The charging path Ru21 for charging the capacitor C17 with the electric charges in the capacitor C27 is a path which passes through the capacitor C27, the resistor R27, the diode D17, the resistor R17, the capacitor C17, the first connection node 11, the second switching element Q2, and the capacitor C27 in this order. The charging path Ru32 for charging the capacitor C27 with the electric charges in the capacitor C37 is a path which passes through the capacitor C37, the resistor R37, the diode D27, the resistor R27, the capacitor C27, the output node 13, the third switching element Q3, and the capacitor C37 in this order.

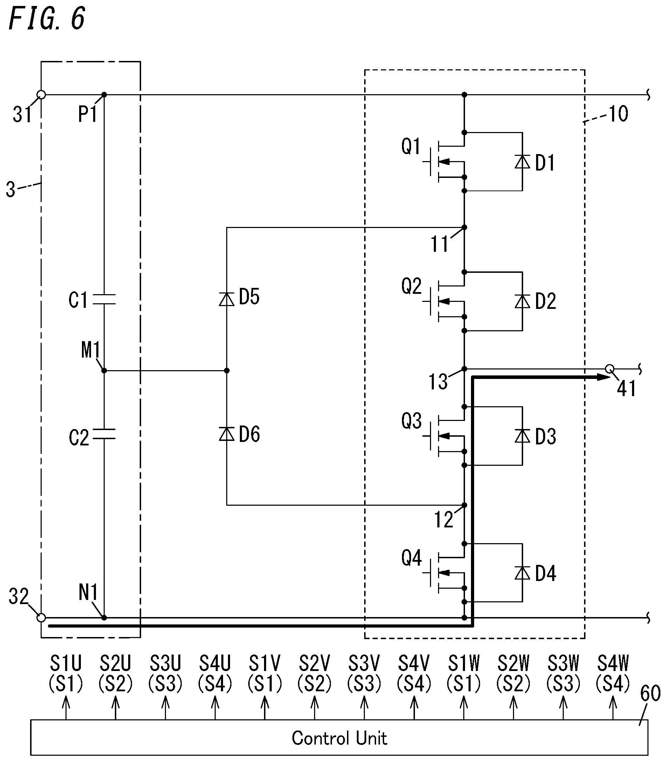

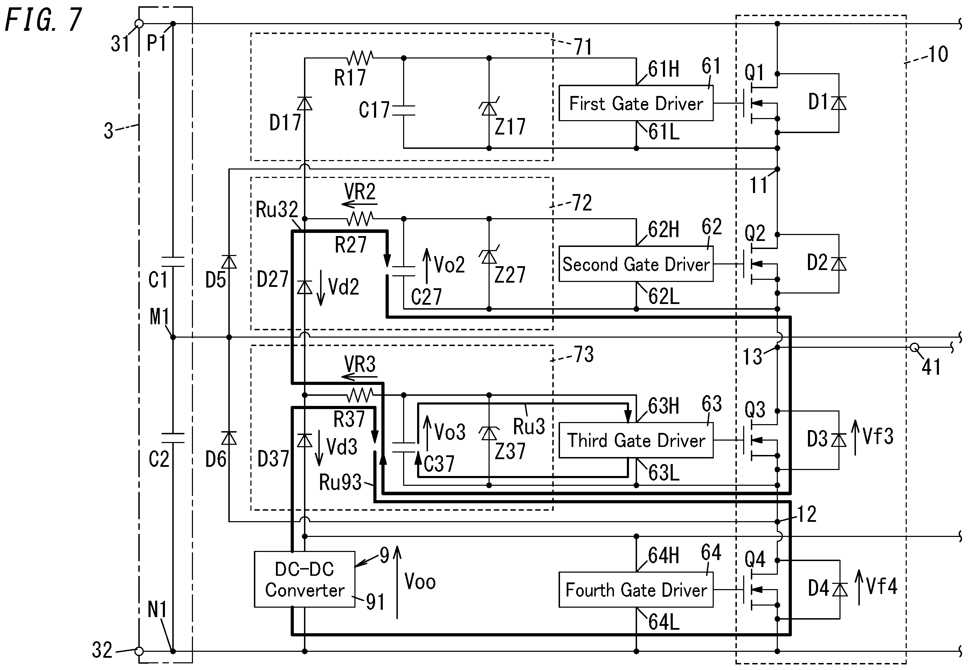

Meanwhile, while the switching circuit of the inverter circuit 1 is in the third switching state, a current flows along a path which passes through the negative electrode N1 of the DC power supply unit 3, the fourth switching element Q4, the third switching element Q3, the output node 13, and the output terminal 41U in this order as indicated by the bold-line arrow shown in FIG. 6 to make the voltage value of the output voltage for the AC load RA1 equal to zero. Also, while the switching circuit 10 of the inverter circuit 1 is in the third switching state, the capacitor C17 of the first bootstrap circuit 71 is charged with electricity, and therefore, the voltage at the capacitor C17 rises with the passage of time to eventually make the capacitor C17 fully charged. In addition, while the switching circuit 10 of the inverter circuit 1 is in the third switching state, the capacitor C27 of the second bootstrap circuit 72 (refer to FIG. 1) is charged with electricity, and therefore, the voltage at the capacitor C27 rises with the passage of time to eventually make the capacitor C27 fully charged. Furthermore, while the switching circuit 10 of the inverter circuit 1 is in the third switching state, a voltage required for the third gate driver 63 to turn ON the third switching element Q3 is supplied from the capacitor C37 of the third bootstrap circuit 73 to the third gate driver 63. Thus, electricity is discharged from the capacitor C37 of the third bootstrap circuit 73 through a discharging path Ru3 which passes through the capacitor C37, the higher-potential power supply terminal 63H of the third gate driver 63, the lower-potential power supply terminal 63L of the third gate driver 63, and the capacitor C37 in this order. Furthermore, supposing the voltage across the power supply unit 9 is Voo, the voltages across the capacitors C27, C37 are Vo2, Vo3, respectively, the voltages across the resistors R27, R37 are VR2, VR3, respectively, and the voltages across the third switching element Q3 and the fourth switching element Q4 are Vf3, Vf4, respectively, as shown in FIG. 7, while the switching circuit 10 of the inverter circuit 1 is in the third switching state, the capacitor C37 is charged with electricity by the power supply unit 9 if a fourth condition is satisfied and the capacitor C27 is charged with electric charges in the capacitor C37 if a fifth condition is satisfied. The fourth condition is Voo > (Vo3 + Vd3 + VR3 + Vf4). The fifth condition is Vo3 > (Vo2 + Vd2 + VR2 + Vf3). The charging path Ru93 for charging the capacitor C37 with the electric charges in the power supply unit 9 is a path which passes through the positive-side terminal of the power supply unit 9, the diode D37, the diode D27, the resistor R27, the capacitor C27, the output node 13, the third switching element Q3, the fourth switching element Q4, and the negative-side terminal of the power supply unit 9 in this order. The charging path Ru32 for charging the capacitor C27 with the electric charges in the capacitor C37 is a path which passes through the capacitor C37, the resistor R37, the diode D27, the resistor R27, the capacitor C27, the output node 13, the third switching element Q3, and the capacitor C37 in this order.

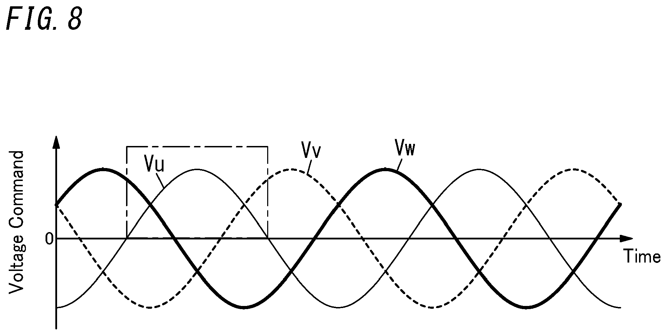

The control unit 60 generates, in accordance with voltage commands Vu, Vv, Vw (refer to FIG. 8) about the respective output voltages of the inverter circuits 1U, 1V, and 1W, first to fourth control signals S1-S4 (S1U-S4U) for the first to fourth switching elements Q1-Q4 of the inverter circuit 1U, first to fourth control signals S1-S4 (S1V-S4V) for the first to fourth switching elements Q1-Q4 of the inverter circuit 1V, and first to fourth control signals S1-S4 (S1W-S4W) for the first to fourth switching elements Q1-Q4 of the inverter circuit 1W.

As shown in FIG. 8, voltage commands Vu, Vv, Vw are sinusoidal wave signals, of which the phases are different from each other by 120 degrees, for example, and have values (voltage command values) which change with time. Note that the voltage commands Vu, Vv, Vw each have one cycle of the same length. Optionally, the control unit 60 may perform proportional-integral (PI) control on the voltage commands Vu, Vv, Vw in accordance with the information provided by a detection unit 8 for detecting the state of the AC load RA1. For example, if the AC load RA1 is a three-phase motor, the information provided by the detection unit 8 includes, for example, information about detection results obtained by a plurality of current sensors for detecting output currents flowing through the U-, V- and W-phases of the AC load RA1 and/or information about the detection results obtained by an encoder for detecting the number of revolutions, the rotational angle, and other parameters of the three-phase motor.

The respective output voltages of the U-phase inverter circuit 1U, the V-phase inverter circuit 1V, and the W-phase inverter circuit 1W have mutually different phases.

The control unit 60 controls the plurality of first gate drivers 61, the plurality of second gate drivers 62, the plurality of third gate drivers 63, and the plurality of fourth gate drivers 64 by performing voltage vector control.

Next, it will be described in further detail how the control unit 60 performs the voltage vector control.

The control unit 60 stores, in advance, a group of voltage vectors. Each of the group of voltage vectors is defined by a combination of respective potential levels at output nodes 13, at each of which the second switching element Q2 and the third switching element Q3 are connected to each other in a corresponding one of the plurality of inverter circuits 1. In other words, each of the group of voltage vectors is defined by the switching state of the switching circuit 10U corresponding to the U-phase, the switching state of the switching circuit 10V corresponding to the V-phase, and the switching state of the switching circuit 10W corresponding to the W-phase. The number of voltage vectors included in one group of voltage vectors is 3³ (= 27).

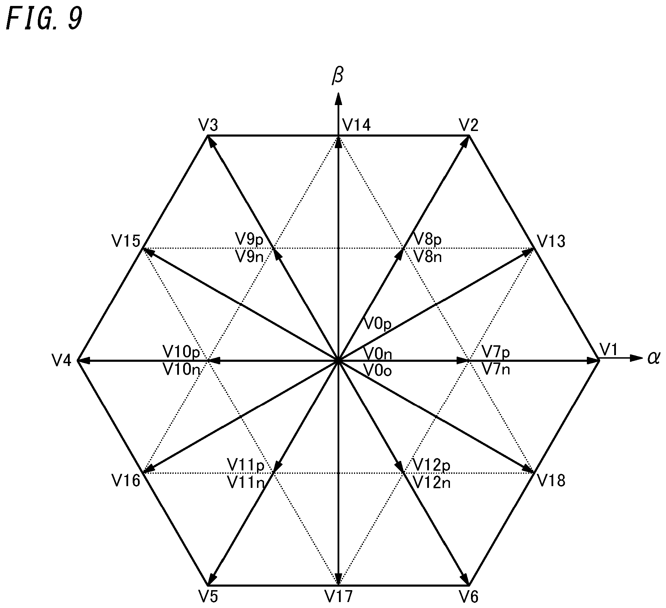

As shown in FIG. 9, one group of voltage vectors includes three zero vectors V0p, V0n, and V0o, each of which has a magnitude of zero. In addition, one group of voltage vectors further includes six voltage vectors V1, V2, V3, V4, V5, and V6, each of which has a magnitude of (2/3)^{1/2}·2Vdc and which have mutually different directions. Furthermore, one group of voltage vectors further includes twelve voltage vectors V7p, V7n, V8p, V8n, V9p, V9n, V10p, V10n, V11p, V11n, V12p, and V12n, each of which has a magnitude of (2/3)^{1/2}·Vdc. Besides, one group of voltage vectors further includes six voltage vectors V13, V14, V15, V16, V17, and V18, each of which has a magnitude of (2/3)^{1/2}·3^{1/2}·Vdc and which have mutually different directions. In FIG. 9, the angle formed between each pair of adjacent voltage vectors belonging to the six voltage vectors V1, V2, V3, V4, V5, and V6 is 60 degrees. The angle formed between each pair of adjacent voltage vectors belonging to the six voltage vectors V13, V14, V15, V16, V17, and V18 is also 60 degrees. Note that FIG. 9 is a vector diagram in which the one group of voltage vectors are illustrated on an orthogonal α-β coordinate system.

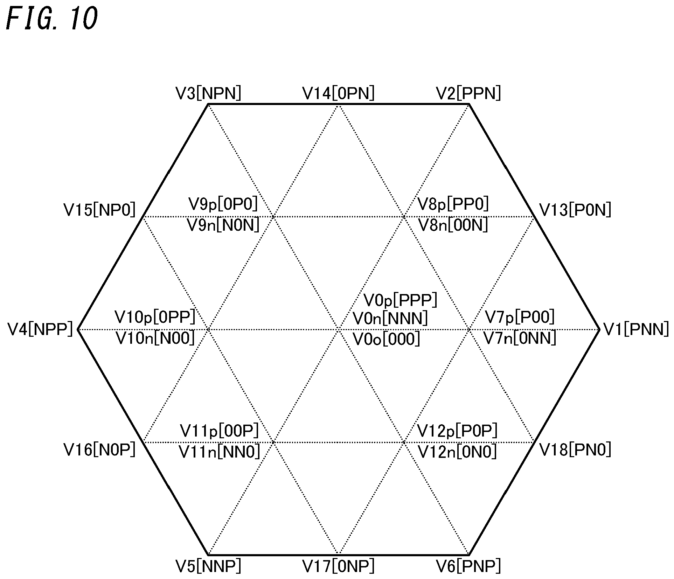

Each group of voltage vectors may be expressed as shown in FIG. 10 if their first, second, and third switching states are designated by the reference signs "P," "0," and "N," respectively, and the respective switching states of the three phases are arranged in the order of U-, V, and W-phases.

As shown in FIG. 10, the three zero vectors V0p, V0n, and V0o may be expressed as V0p[PPP], V0n[NNN], and V0o[000], respectively. For example, V0p[PPP] indicates that regarding the zero vector V0p, the switching state of the U-phase switching circuit 10U is "P," the switching state of the V-phase switching circuit 10V is "P," and the switching state of the W-phase switching circuit 10W is "P." A voltage vector with the suffix "p" such as V10p includes "P" but does not include "N." The same statement will apply to the rest of the description. A voltage vector with the suffix "n" such as V10n includes "N" but does not include "P." The same statement will apply to the rest of the description. A voltage vector with the suffix "o" such as V10o includes "0" but includes neither "P" nor "N." If the switching state of the switching circuit 10 is "P," then the potential at the output node 13 of the switching circuit 10 will be the potential at the positive electrode P1 of the DC power supply unit 3. If the switching state of the switching circuit 10 is "N," then the potential at the output node 13 of the switching circuit 10 will be the potential at the negative electrode N1 of the DC power supply unit 3. If the switching state of the switching circuit 10 is "0," then the potential at the output node 13 of the switching circuit 10 will be the potential at the intermediate potential node M1 of the DC power supply unit 3.

The six voltage vectors V1, V2, V3, V4, V5, and V6 may be expressed as V1[PNN], V2[PPN], V3[NPN], V4[NPP], V5[NNP], and V6[PNP], respectively. A voltage vector with none of the suffixes "p," "n," and "o" added to the numeral following "V" such as V1[PNN], V2[PPN], V3[NPN], V4[NPP], V5[NNP], and V6[PNP] includes "P" and "N" as two out of the three-phase switching states.

The twelve voltage vectors V7p, V7n, V8p, V8n, V9p, V9n, V10p, V10n, V11p, V11n, V12p, and V12n may be expressed as V7p[P00], V7n[0NN], V8p[PP0], V8n[00N], V9p[0P0], V9n[N0N], V10p[0PP], V10n[N00], V11p[00P], V11n[NN0], V12p[P0P], and V12n[0N0], respectively.

The six voltage vectors V13, V14, V15, V16, V17, and V18 may be expressed as V13[P0N], V14[0PN], V15[NP0], V16[N0P], V17[0NP], and V18[PN0], respectively.

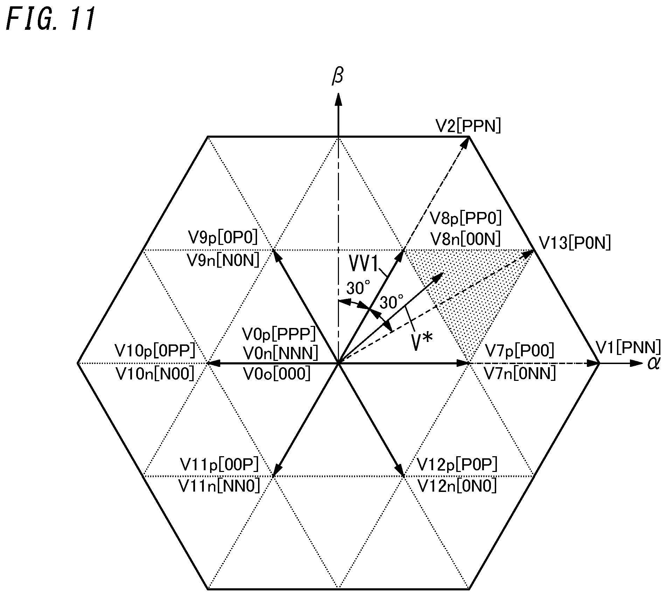

The control unit 60 transforms the instantaneous value of the command voltage with respect to the output voltage of each of the plurality of inverter circuits 1 into a command voltage vector V* (refer to FIG. 11). If the α-axis component of the command voltage vector V* on the orthogonal α-β coordinate system is Vα and the β-axis component of the command voltage vector V* on the orthogonal α-β coordinate system is Vβ, then the command voltage vector V* may be given by the following Equation (1):

[Mathematical Expression 1] $V * = \left[\begin{matrix}Vα \\ Vβ\end{matrix}\right] = \sqrt{\frac{2}{3}} ⋅ \left[\begin{matrix}1 & - \frac{1}{2} & - \frac{1}{2} \\ 0 & \frac{\sqrt{3}}{2} & - \frac{\sqrt{3}}{2}\end{matrix}\right] \left[\begin{matrix}Vu \\ Vv \\ Vw\end{matrix}\right]$

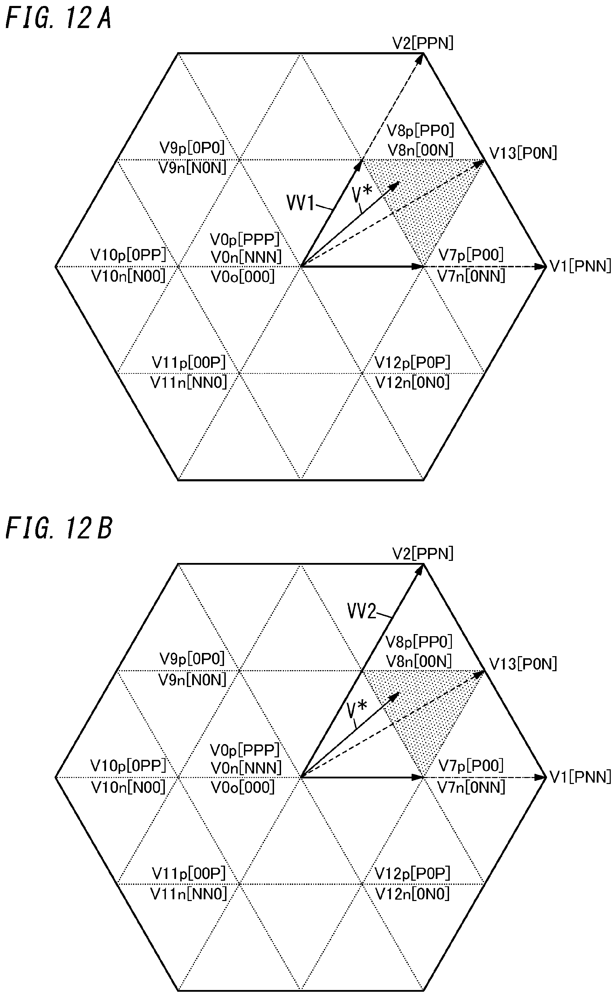

The control unit 60 selects a plurality of (e.g., five) voltage vectors located adjacently to the command voltage vector V* which belong to the group of voltage vectors. In the example shown in FIG. 12A, the plurality of voltage vectors are V8p[PP0], V8n[00N], V13[P0N], V7p[P00], and V7n[0NN].

The control unit 60 replaces one first voltage vector VV1 out of two first voltage vectors VV1 (e.g., V8p[PP0] and V8n[00N] in the example shown in FIGS. 11 and 12A) which belong to the plurality of voltage vectors, have a reference magnitude, and are located closest to the command voltage vector V* with a zero vector V0n[NNN] defined by a combination of potential levels at the respective output nodes 13, which are as high as a potential at the negative electrode and a second voltage vector VV2 (e.g., V2[PPN] in the example shown in FIG. 12B) having the same direction as, and a different magnitude from, the two first voltage vectors VV1. The reference magnitude may be, for example, (2/3)^{1/2}·Vdc. Thus, the plurality of voltage vectors includes, as voltage vectors of which the magnitude is the reference magnitude (i.e., reference vectors), twelve voltage vectors V7p[P00], V7n[0NN], V8p[PP0], V8n[00N], V9p[0P0], V9n[N0N], V10p[0PP], V10n[N00], V11p[00P], V11n[NN0], V12p[P0P], and V12n[0N0]. The angle formed between each of the two first voltage vectors VV1 located closest to the command voltage vector V* and the command voltage vector V* is smaller than 30 degrees.

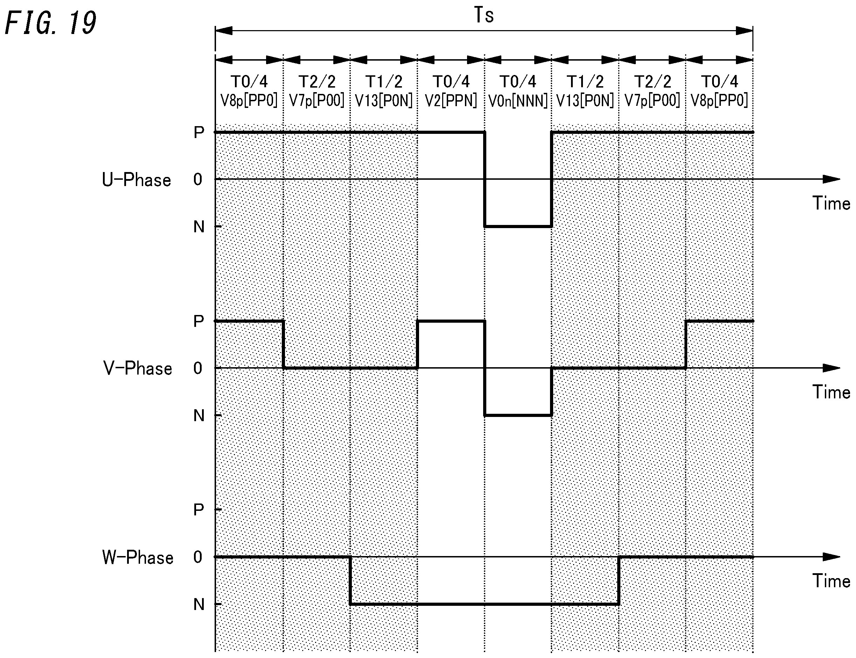

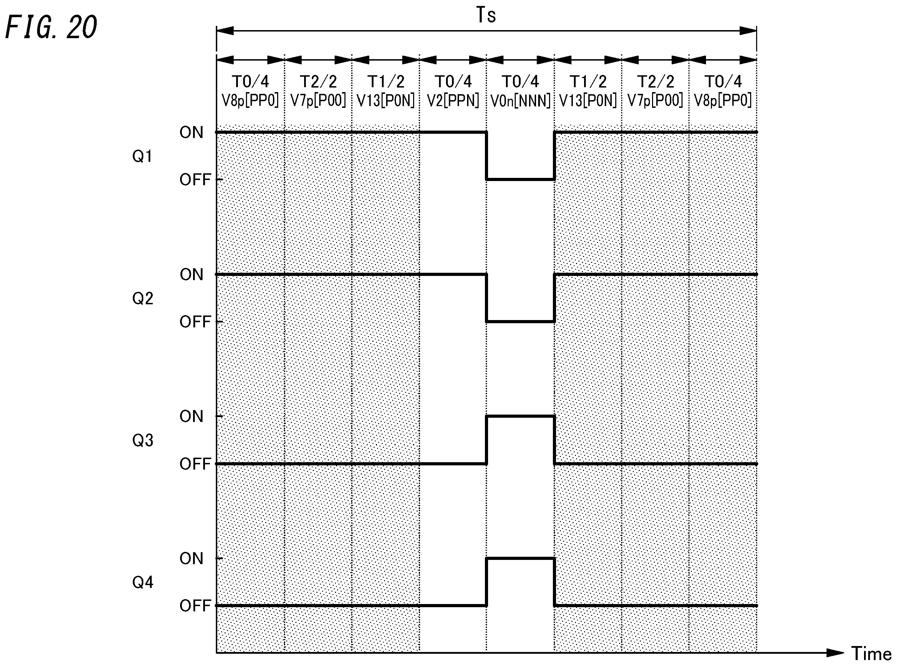

The control unit 60 controls the plurality of first gate drivers 61, the plurality of second gate drivers 62, the plurality of third gate drivers 63, and the plurality of fourth gate drivers 64 within a predetermined control cycle Ts (refer to, for example, FIGS. 19 and 20) so that a synthetic vector matches the command voltage vector V*. The synthetic vector is a synthetic vector of: at least one first voltage vector VV1 out of two first voltage vectors VV1 (e.g., V8p[PP0] and V8n[00N] in the example shown in FIG. 12A); one or more voltage vectors (e.g., V13[P0N] and V7p[P00] in the example shown in FIG. 12B), excluding the two first voltage vectors VV1, out of the plurality of voltage vectors; a zero vector V0n[NNN]; and a second voltage vector VV2. The predetermined control cycle Ts may be, for example, two cycles of a carrier signal.

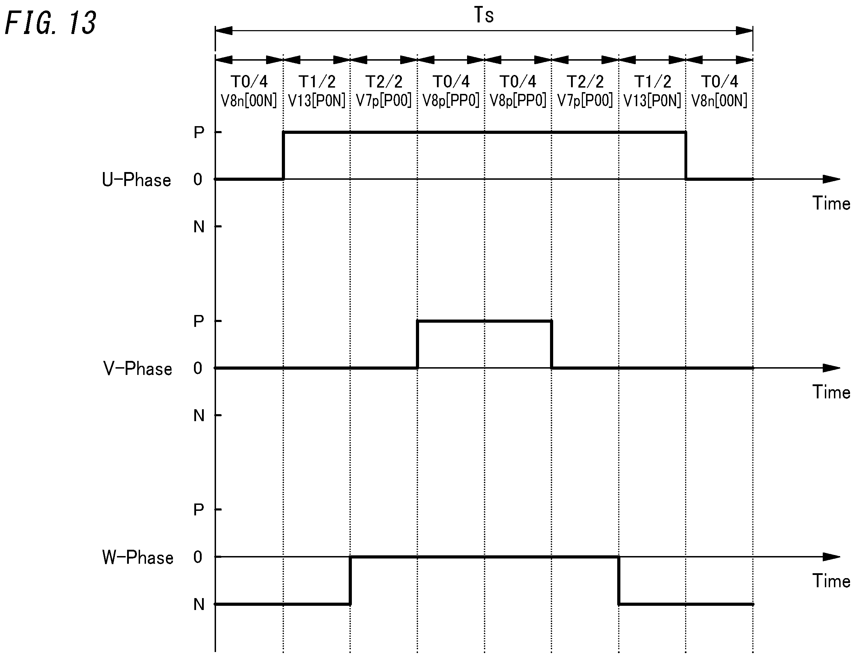

Meanwhile, in a comparative example in which a control operation is performed with the first voltage vectors not replaced with a zero vector and a second voltage vector, a synthetic vector of three vectors at the three vertices of an equilateral triangle surrounding the command voltage vector V* is made equal to the command voltage vector V* within the control cycle Ts. Specifically, in the comparative example, in the case of the command voltage vector V* shown in FIG. 12A, a synthetic vector of the two first voltage vectors VV1 (e.g., V8p[PP0] and V8n[00N] in the example shown in FIG. 12A), the voltage vector V13[P0N], and the voltage vector V7p[P00] is made equal to the command voltage vector V*. In the comparative example, the control cycle Ts is one cycle of a carrier signal. In the comparative example, in two voltage vectors arranged in line along the time series, the switching state of only one phase out of the U-, V-, and W-phases changes either between "P" and "0" or between "0" and "N" and the same voltage vector is output twice apiece within the control cycle Ts as shown in FIG.13, for example. Specifically, in the example shown in FIG. 13, the plurality of first control signals S1, the plurality of second control signals S2, the plurality of third control signals S3, and the plurality of fourth control signals S4 are output following the order of the voltage vector V8n[00N], the voltage vector V13[P0N], the voltage vector V7p[P00], the voltage vector V8p[PP0], the voltage vector V8p[PP0], the voltage vector V7p[P00], the voltage vector V13[P0N], and the voltage vector V8n[00N]. In the example shown in FIG. 13, the time assigned out of the control cycle Ts to the voltage vectors V8p and V8n is T0, the time assigned to the voltage vector V13 is T1, and the time assigned to the voltage vectors V7p is T2. As for T0, T1, and T2, supposing the voltage vectors at the three vertices of an equilateral triangle surrounding the command voltage vector V* are Va, Vb, and Vc, respectively, the magnitude of the command voltage vector V* is V, and the angle defined by the command voltage vector V* with respect to the α-axis is θ, T0, T1, and T2 are determined to satisfy the following Equations (2) and (3). In Equation (2), "j" represents an imaginary unit. Note that in the example shown in FIG. 13, the voltage vector Va in Equation (2) may be, for example, the voltage vectors V8p[PP0] and V8n[00N], the voltage vector Vb in Equation (2) may be the voltage vector V13[P0N], and the voltage vectors Vc in Equation (2) may be the voltage vector V7p[P00].

[Mathematical Expression 2] $\begin{matrix}Va ⋅ T 0 + Vb ⋅ T 1 + Vc ⋅ T 2 \\ = V ⋅ Ts ⋅ cos θ + jV ⋅ Ts ⋅ sin θ\end{matrix}$

[Mathematical Expression 3] $T 0 + T 1 + T 2 = Ts$

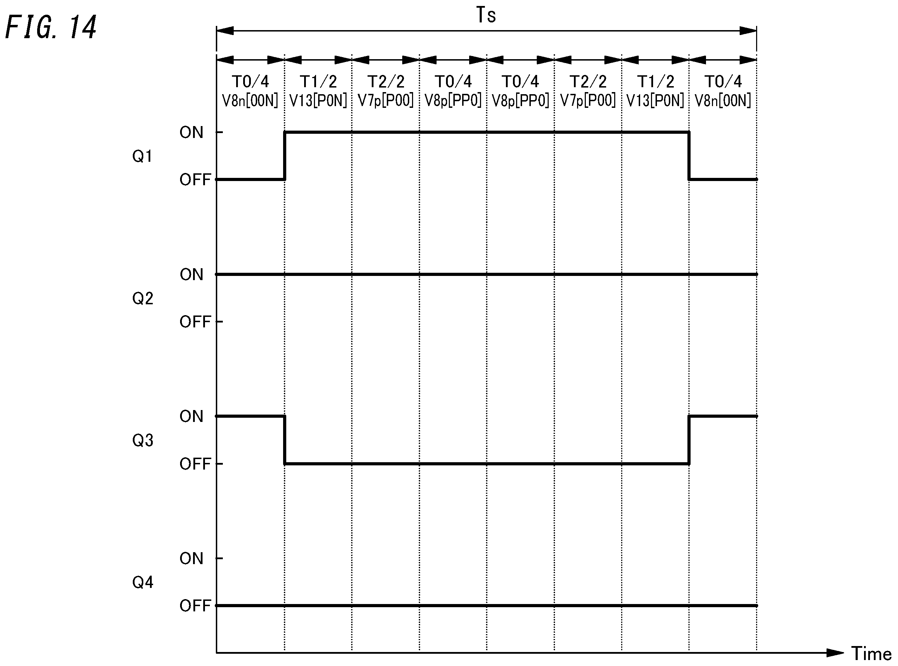

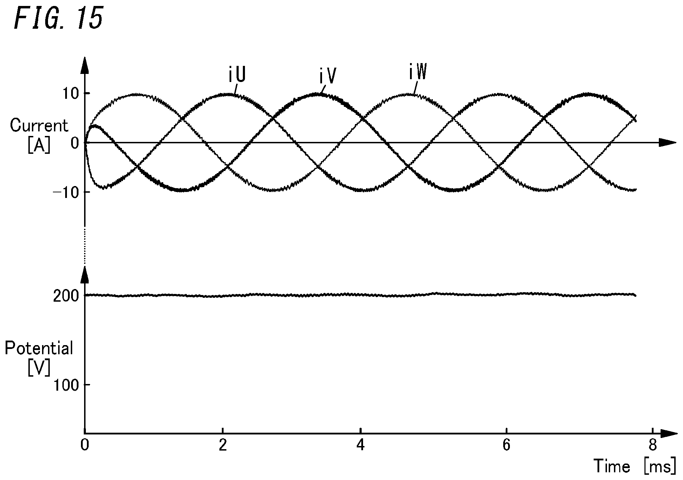

In the example shown in FIG. 13, the second switching element Q2 of the switching circuits 10U and 10V will remain ON, and the magnitude of voltage drop in the second bootstrap circuit 72 will increase in each of the switching circuits 10U and 10V, all through the control cycle Ts as shown in FIG. 14, for example. Note that in the comparative example, the U-phase load current iU, the V-phase load current iV, and the W-phase load current iW each have the sinusoidal waveform as shown in FIG. 15, and have phases which are different from each other by 120 degrees. In addition, in the comparative example, the potential at the intermediate potential node M1 is substantially constant as shown in FIG. 15.

The control unit 60 of the multi-level inverter 100 according to the first embodiment has: a first control mode in which a potential at the intermediate potential node M1 is raised; a second control mode in which the potential at the intermediate potential node M1 is lowered; and a third control mode in which the potential at the intermediate potential node M1 is maintained.

Next, a relationship between the voltage vectors and the potential at the intermediate potential node M1 will be described before the first control mode, the second control mode, and the third control mode are described. Note that each of FIGS. 16A, 17A, and 18A to be referred to in the following description may be interpreted in the same way as FIG. 10.

FIG. 16B illustrates an equivalent circuit showing a relationship between the intermediate potential node M1 and the U-phase load RA1u, V-phase load RA1v, and W-phase load RA1w of the AC load RA1 in a situation where the control unit 60 has performed control using the zero vector V0p[PPP] shown in FIG. 16A. FIG. 16C illustrates an equivalent circuit showing a relationship between the intermediate potential node M1 and the U-phase load RA1u, V-phase load RA1v, and W-phase load RA1w of the AC load RA1 in a situation where the control unit 60 has performed control using the zero vector V0o[000]. FIG. 16D illustrates an equivalent circuit showing a relationship between the intermediate potential node M1 and the U-phase load RA1u, V-phase load RA1v, and W-phase load RA1w of the AC load RA1 in a situation where the control unit 60 has performed control using the zero vector V0n[NNN]. In each of the equivalent circuits shown in FIGS. 16B, 16C, and 16D, the multi-level inverter 100 has no potential difference between the respective nodes to which the U-phase load RA1u, V-phase load RA1v, and W-phase load RA1w are connected, and therefore, the potential at the intermediate potential node M1 does not change.

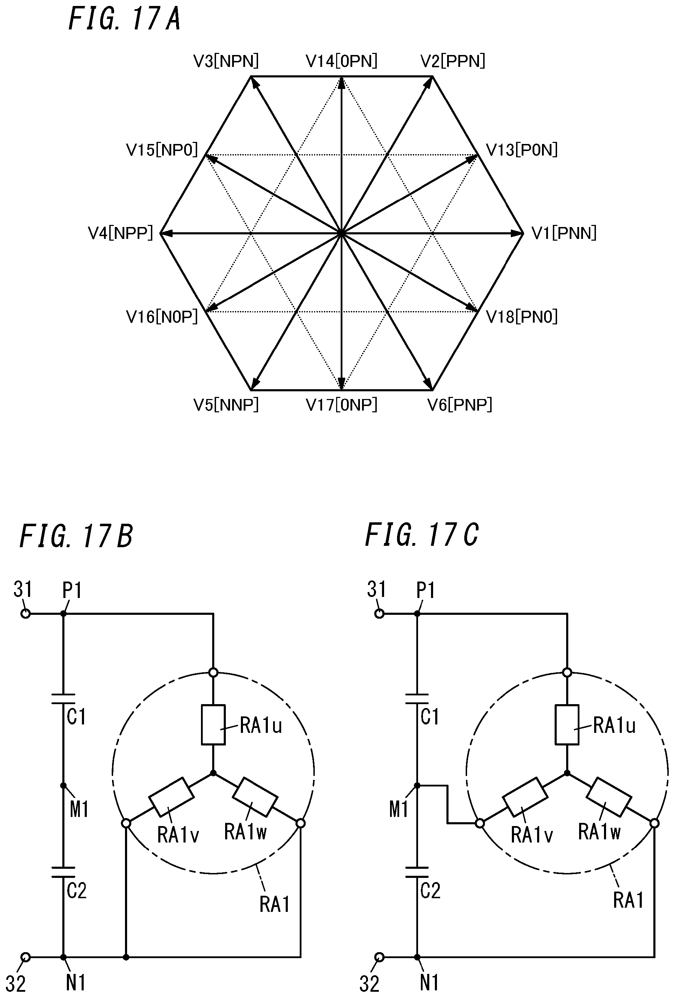

FIG. 17B illustrates an equivalent circuit showing a relationship between the intermediate potential node M1 and the U-phase load RA1u, V-phase load RA1v, and W-phase load RA1w of the AC load RA1 in a situation where the control unit 60 has performed control using a voltage vector V1[PNN] belonging to the six voltage vectors V1[PNN], V2[PPN], V3[NPN], V4[NPP], V5[NNP], and V6[PNP] shown in FIG. 17A. That is to say, FIG. 17B illustrates an equivalent circuit showing a situation where the control unit 60 has performed control using a voltage vector including the potential level at the positive electrode P1 and the potential level at the negative electrode N1 but not including the potential level at the intermediate potential node M1. In the equivalent circuit shown in FIG. 17B, in the multi-level inverter 100, none of the U-phase load RA1u, V-phase load RA1v, and W-phase load RA1w is connected to the intermediate potential node M1, and therefore, the potential at the intermediate potential node M1 does not change. In the case of the voltage vectors V2[PPN], V3[NPN], V4[NPP], V5[NNP], and V6[PNP] shown in FIG. 17A, in the multi-level inverter 100, none of the U-phase load RA1u, V-phase load RA1v, and W-phase load RA1w is connected to the intermediate potential node M1, and therefore, the potential at the intermediate potential node M1 does not change, either.

FIG. 17C illustrates an equivalent circuit showing a relationship between the intermediate potential node M1 and the U-phase load RA1u, V-phase load RA1v, and W-phase load RA1w of the AC load RA1 in a situation where the control unit 60 has performed control using a voltage vector V13[P0N] belonging to the six voltage vectors V13[P0N], V14[0PN], V15[NP0], V16[N0P], V17[0NP], and V18[PN0] shown in FIG. 17A. That is to say, FIG. 17C illustrates an equivalent circuit showing a situation where the control unit 60 has performed control using a voltage vector including the potential level at the positive electrode P1, the potential level at the negative electrode N1, and the potential level at the intermediate potential node M1. In the equivalent circuit shown in FIG. 17C, when there is equilibrium between the U-phase load RA1u, V-phase load RA1v, and W-phase load RA1w, the potential at the intermediate potential node M1 does not change. In the case of the voltage vectors V14[0PN], V15[NP0], V16[N0P], V17[0NP], and V18[PN0] shown in FIG. 17A, when there is equilibrium between the U-phase load RA1u, V-phase load RA1v, and W-phase load RA1w, the potential at the intermediate potential node M1 does not change, either.

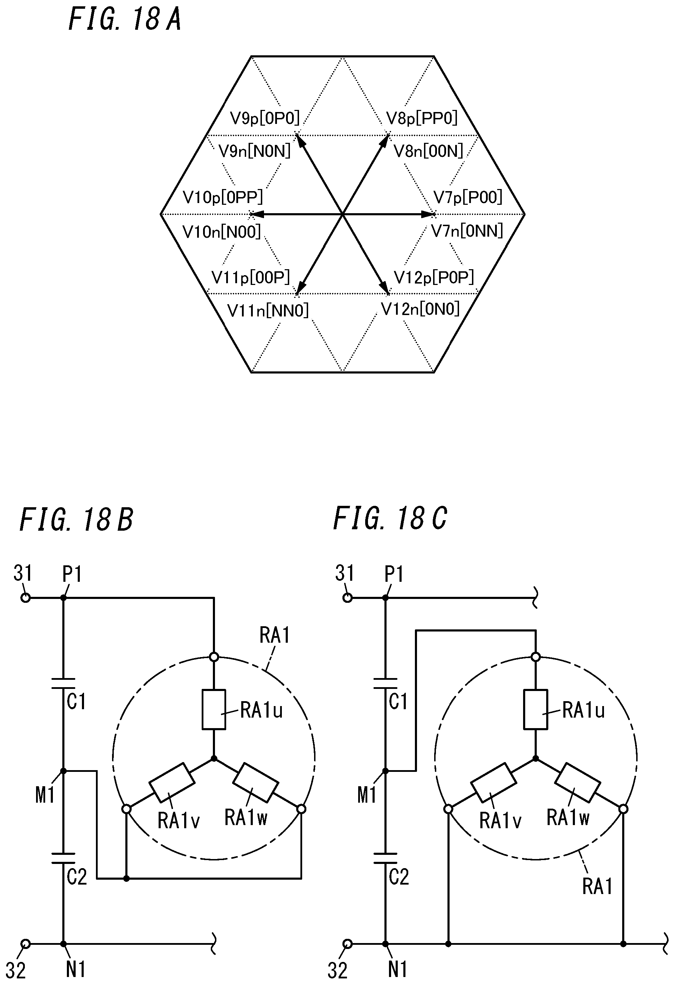

FIG. 18B illustrates an equivalent circuit showing a relationship between the intermediate potential node M1 and the U-phase load RA1u, V-phase load RA1v, and W-phase load RA1w of the AC load RA1 in a situation where the control unit 60 has performed control using any one of the six voltage vectors V7p[P00], V8p[PP0], V9p[0P0], V10p[0PP], V11p[00P], and V12p[P0P] shown in FIG. 18A. That is to say, FIG. 18B illustrates an equivalent circuit showing a situation where the control unit 60 has performed control using a voltage vector including the potential level at the positive electrode P1 and the potential level at the intermediate potential node M1 but not including the potential level at the negative electrode N1. In the equivalent circuit shown in FIG. 18B, the potential at the intermediate potential node M1 increases. On the other hand, FIG. 18C illustrates an equivalent circuit showing a relationship between the intermediate potential node M1 and the U-phase load RA1u, V-phase load RA1v, and W-phase load RA1w of the AC load RA1 in a situation where the control unit 60 has performed control using any one of the six voltage vectors V7n[0NN], V8n[00N], V9n[N0N], V10n[N00], V11n[NN0], and V12n[0N0] shown in FIG. 18A. That is to say, FIG. 18C illustrates an equivalent circuit showing a situation where the control unit 60 has performed control using a voltage vector including the potential level at the negative electrode N1 and the potential level at the intermediate potential node M1 but not including the potential level at the positive electrode P1. In the equivalent circuit shown in FIG. 18C, the potential at the intermediate potential node M1 increases.

In the first control mode, the control unit 60 replaces one first voltage vector VV1 (e.g., the voltage vector V8n[00N] in the example shown in FIG. 12A), including the potential level at the negative electrode N1 in the combination of the potential levels at the plurality of the output nodes 13, out of two first voltage vectors VV1 (e.g., the voltage vectors V8p[PP0] and V8n[00N] in the example shown in FIG. 12A), belonging to the plurality of voltage vectors, having a reference magnitude, and located closest to the command voltage vector V*, with the zero vector V0n[NNN] and a second voltage vector VV2 (e.g., the voltage vector V2[PPN] in the example shown in FIG. 12B) having the same direction as, and twice as large a magnitude as, the one first voltage vector VV1. In the first control mode, the control unit 60 controls the plurality of first gate drivers 61, the plurality of second gate drivers 62, the plurality of third gate drivers 63, and the plurality of fourth gate drivers 64 within a predetermined control cycle Ts so that a synthetic vector matches the command voltage vector V*. The synthetic vector is a synthetic vector of: one or more voltage vectors (e.g., the voltage vector V13[P0N] and the voltage vector V7p[P00] in the example shown in FIG. 12A), excluding the two first voltage vectors VV1, out of the plurality of voltage vectors; a remaining first voltage vector (e.g., the voltage vector V8p[PP0] in the example shown in FIG. 12A) including the potential level at the positive electrode P1 in the combination of the potential levels at the plurality of the output nodes 13 which belong to the two first voltage vectors VV1; the zero vector V0n[NNN]; and the second voltage vector VV2 (e.g., the voltage vector V2[PPN] in the example shown in FIG. 12A).

In the first control mode of the control unit 60, the plurality of first control signals S1, the plurality of second control signals S2, the plurality of third control signals S3, and the plurality of fourth control signals S4 are output for the voltage vector V8p[PP0], the voltage vector V7p[P00], the voltage vector V13[P0N], the voltage vector V2[PPN], the zero vector V0n[NNN], the voltage vector V13[P0N], the voltage vector V7p[P00], and the voltage vector V8p[PP0] shown in FIG. 19, for example, in this order within two cycles of the carrier signal. In the first control mode of the control unit 60, the voltage vectors V8n[00N] and V8n[00N] according to the comparative example shown in FIG. 13 are replaced with the second voltage vector VV2 (voltage vector V2[PPN]) and the zero vector V0n[NNN], respectively, thus allowing a period in which the U-phase switching state is "N" to be generated as shown in FIG. 19. This allows the multi-level inverter 100 according to the first embodiment to generate the third switching state in which the first switching element Q1 and the second switching element Q2 of the switching circuit 10U are both in OFF state and the third switching element Q3 and the fourth switching element Q4 of the switching circuit 10U are both in ON state as shown in FIG. 20, for example. Thus, the multi-level inverter 100 according to the first embodiment may reduce the chances of causing a voltage drop in the capacitors C27 of the second bootstrap circuits 72. Note that in the example shown in FIG. 19, there is a period in which the V-phase switching state and the W-phase switching state are both "N," and therefore, the capacitor C27 of the second bootstrap circuit 72 corresponding to each of the switching circuits 10V, 10W is charged with electricity to maintain the voltage. Thus, in the example shown in FIG. 20, the multi-level inverter 100 is in a mode in which the multi-level inverter 100 is ready to charge the capacitor C27 of the second bootstrap circuit 72 with electricity in each of the three switching circuits 10U, 10V, and 10W.

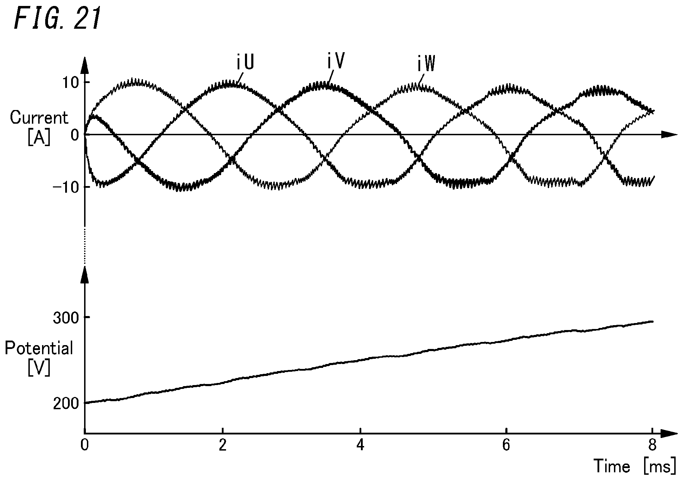

In the first control mode of the control unit 60, the plurality of first gate drivers 61, the plurality of second gate drivers 62, the plurality of third gate drivers 63, and the plurality of fourth gate drivers 64 are controlled within a predetermined control cycle Ts so that a synthetic vector matches the command voltage vector V*. The synthetic vector is a synthetic vector of: one or more voltage vectors (e.g., the voltage vector V13[P0N] and the voltage vector V7p[P00] in the example shown in FIG. 12A), excluding the two first voltage vectors VV1, out of the plurality of voltage vectors; a remaining first voltage vector (e.g., the voltage vector V8p[PP0] in the example shown in FIG. 12A) including the potential level at the positive electrode P1 in the combination of the potential levels at the plurality of the output nodes 13 which belong to the two first voltage vectors VV1; the zero vector V0n[NNN]; and the second voltage vector VV2 (e.g., the voltage vector V2[PPN] in the example shown in FIG. 12A). This allows the multi-level inverter 100 according to the first embodiment to raise the potential at the intermediate potential node M1 as shown in FIG. 21.

In the second control mode, the control unit 60 replaces a remaining first voltage vector VV1 (e.g., the voltage vector V8p[PP0] in the example shown in FIG. 12A), including the potential level at the positive electrode P1 in the combination of the potential levels at the plurality of the output nodes 13, out of two first voltage vectors VV1 (e.g., the voltage vectors V8p[PP0] and V8n[00N] in the example shown in FIG. 12A), belonging to the plurality of voltage vectors, having a reference magnitude, and located closest to the command voltage vector V*, with the zero vector V0n[NNN] and a second voltage vector VV2 (e.g., the voltage vector V2[PPN] in the example shown in FIG. 12B) having the same direction as, and twice as large a magnitude as, the remaining first voltage vector VV1. In the second control mode, the control unit 60 controls the plurality of first gate drivers 61, the plurality of second gate drivers 62, the plurality of third gate drivers 63, and the plurality of fourth gate drivers 64 within a predetermined control cycle Ts so that a synthetic vector matches the command voltage vector V*. The synthetic vector is a synthetic vector of: one or more voltage vectors (e.g., the voltage vector V13[P0N] and the voltage vector V7p[P00] in the example shown in FIG. 12A), excluding the two first voltage vectors VV1, out of the plurality of voltage vectors; one first voltage vector (e.g., V8n[00N] in the example shown in FIG. 12A) including the potential level at the negative electrode N1 in the combination of the potential levels at the plurality of the output nodes 13 which belong to the two first voltage vectors VV1; the zero vector V0n[NNN]; and the second voltage vector VV2 (e.g., the voltage vector V2[PPN] in the example shown in FIG. 12B).

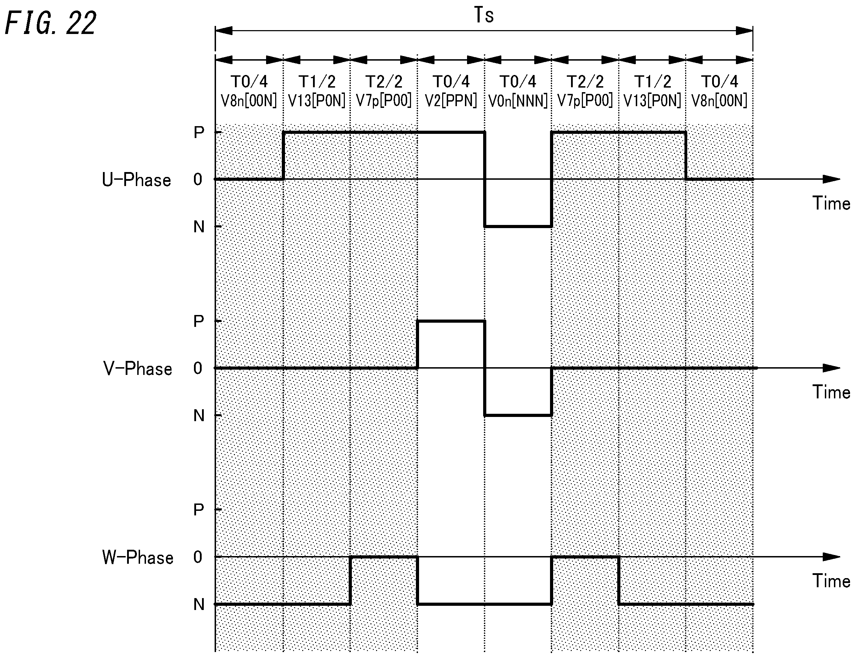

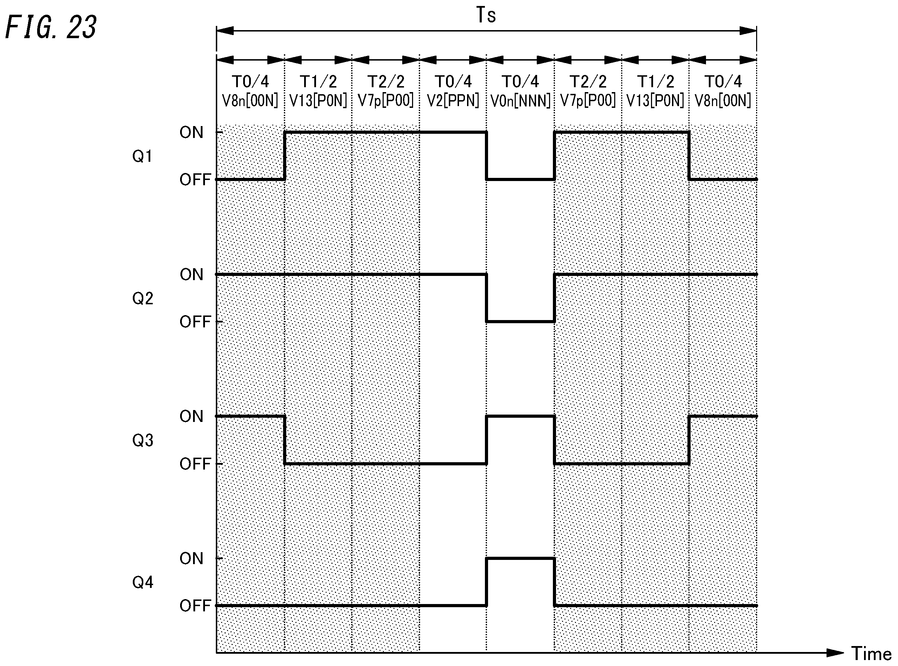

In the second control mode of the control unit 60, the plurality of first control signals S1, the plurality of second control signals S2, the plurality of third control signals S3, and the plurality of fourth control signals S4 are output for the voltage vector V8n[00N], the voltage vector V13[P0N], the voltage vector V7p[P00], the voltage vector V2[PPN], the zero vector V0n[NNN], the voltage vector V7p[P00], the voltage vector V13[P0N], and the voltage vector V8n[00N] shown in FIG. 22, for example, in this order within two cycles of the carrier signal. In the second control mode of the control unit 60, the voltage vectors V8p[PP0] and V8p [PP0] according to the comparative example shown in FIG. 13 are replaced with the second voltage vector VV2 (e.g., voltage vector V2[PPN]) and the zero vector V0n[NNN], respectively, thus allowing a period in which the U-phase switching state is "N" to be generated as shown in FIG. 22. This allows the multi-level inverter 100 according to the first embodiment to generate the third switching state in which the first switching element Q1 and the second switching element Q2 of the switching circuit 10U are both in OFF state and the third switching element Q3 and the fourth switching element Q4 of the switching circuit 10U are both in ON state as shown in FIG. 23, for example. Thus, the multi-level inverter 100 according to the first embodiment may reduce the chances of causing a voltage drop in the capacitors C27 of the second bootstrap circuits 72. Note that in the example shown in FIG. 22, there is a period in which the V-phase switching state and the W-phase switching state are both "N," and therefore, the capacitor C27 of the second bootstrap circuit 72 corresponding to each of the switching circuits 10V, 10W is charged with electricity to maintain the voltage. Thus, in the example shown in FIG. 23, the multi-level inverter 100 is in a mode in which the multi-level inverter 100 is ready to charge the capacitor C27 of the second bootstrap circuit 72 with electricity in each of the three switching circuits 10U, 10V, and 10W.

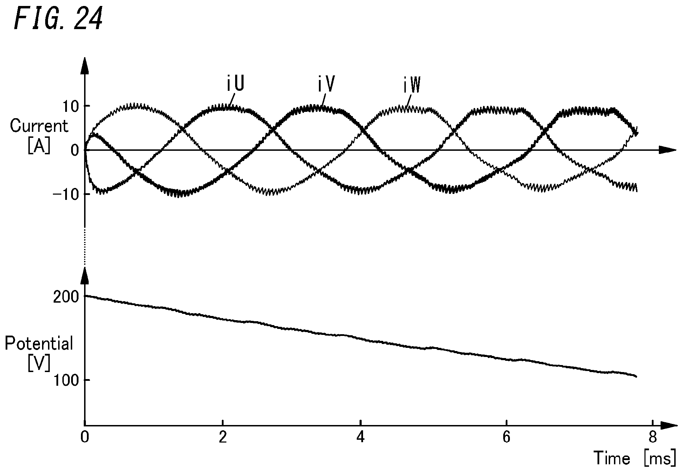

In the second control mode of the control unit 60, the plurality of first gate drivers 61, the plurality of second gate drivers 62, the plurality of third gate drivers 63, and the plurality of fourth gate drivers 64 are controlled within a predetermined control cycle Ts so that a synthetic vector matches the command voltage vector V*. The synthetic vector is a synthetic vector of: one or more voltage vectors (e.g., the voltage vector V13[P0N] and the voltage vector V7p[P00] in the example shown in FIG. 12A), excluding the two first voltage vectors VV1, out of the plurality of voltage vectors; a remaining first voltage vector (e.g., the voltage vector V8n[00N] in the example shown in FIG. 12A) including the potential level at the negative electrode N1 in the combination of the potential levels at the plurality of the output nodes 13 which belong to the two first voltage vectors VV1; the zero vector V0n[NNN]; and the second voltage vector VV2 (e.g., the voltage vector V2[PPN] in the example shown in FIG. 12B) This allows the multi-level inverter 100 according to the first embodiment to decrease the potential at the intermediate potential node M1 as shown in FIG. 24.

In the third control mode, the control unit 60 selects a zero vector V0n[NNN] and a second voltage vector VV2 (e.g., the voltage vector V2[PPN] in the example shown in FIG. 12B) having the same direction as, and twice as large a magnitude as, the one first voltage vector VV1. In the third control mode, the control unit 60 controls the plurality of first gate drivers 61, the plurality of second gate drivers 62, the plurality of third gate drivers 63, and the plurality of fourth gate drivers 64 within the predetermined control cycle Ts so that a synthetic vector matches the command voltage vector V*. The synthetic vector is a synthetic vector of: one or more voltage vectors (e.g., the voltage vector V13[P0N] and the voltage vector V7p[P00] in the example shown in FIG. 12A), excluding the two first voltage vectors VV1, out of the plurality of voltage vectors; one first voltage vector (e.g., the voltage vector V8p[PP0] in the example shown in FIG. 12A) including the potential level at the positive electrode P1 in the combination of the potential levels at the plurality of the output nodes 13 which belong to the two first voltage vectors VV1; a remaining first voltage vector (e.g., the voltage vector V8n[00N] in the example shown in FIG. 12A) including the potential level at the negative electrode N1 in the combination of the potential levels at the plurality of the output nodes 13 which belong to the two first voltage vectors VV1; the zero vector V0n[NNN]; and the second voltage vector VV2 (e.g., the voltage vector V2[PPN] in the example shown in FIG. 12A).

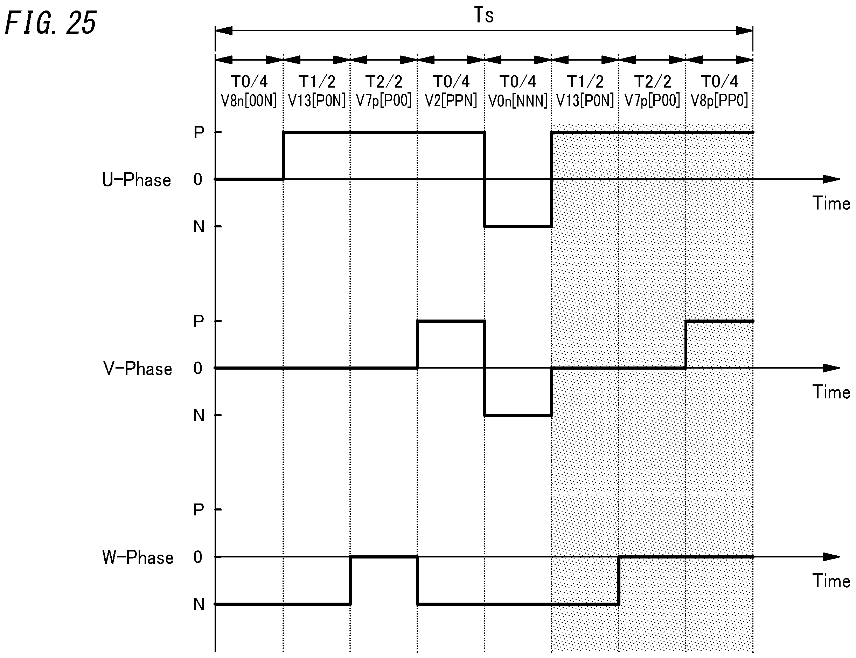

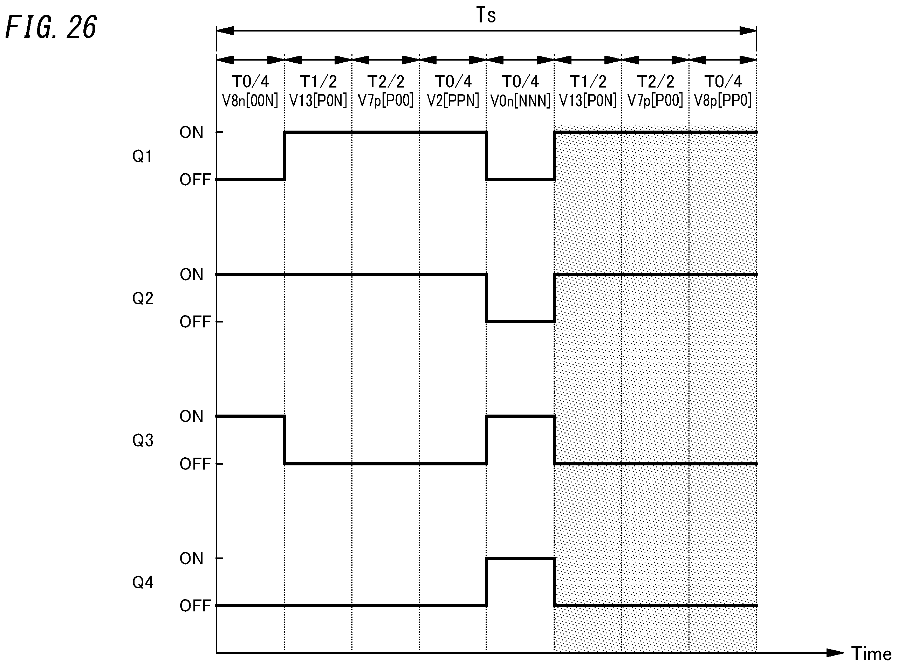

In the third control mode of the control unit 60, the plurality of first control signals S1, the plurality of second control signals S2, the plurality of third control signals S3, and the plurality of fourth control signals S4 are output for the voltage vector V8n[00N], the voltage vector V13[P0N], the voltage vector V7p[P00], the voltage vector V2[PPN], the zero vector V0n[NNN], the voltage vector V13[P0N], the voltage vector V7p[P00], and the voltage vector V8p[PP0] shown in FIG. 25, for example, in this order within two cycles of the carrier signal. In the third control mode of the control unit 60, the voltage vectors V8p[PP0] and V8p [PP0] according to the comparative example shown in FIG. 13 are replaced with the second voltage vector VV2 (e.g., V2[PPN]) and the zero vector V0n[NNN], respectively, thus allowing a period in which the U-phase switching state is "N" to be generated as shown in FIG. 25. This allows the multi-level inverter 100 according to the first embodiment to generate the third switching state in which the first switching element Q1 and the second switching element Q2 of the switching circuit 10U are both in OFF state and the third switching element Q3 and the fourth switching element Q4 of the switching circuit 10U are both in ON state as shown in FIG. 26, for example. Thus, the multi-level inverter 100 according to the first embodiment may reduce the chances of causing a voltage drop in the capacitors C27 of the second bootstrap circuits 72.

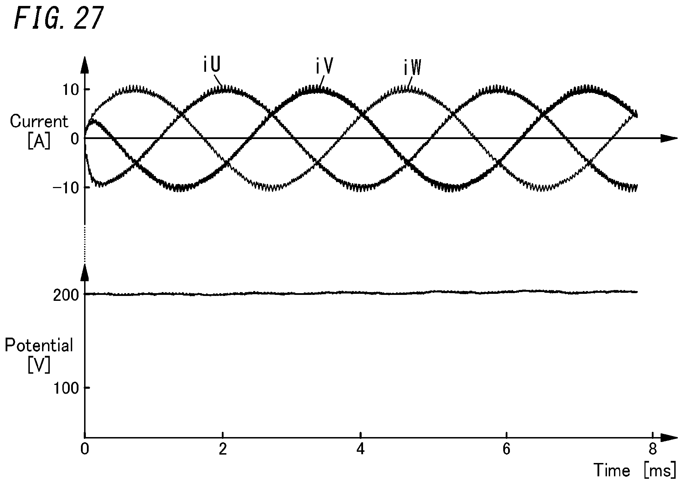

In the third control mode of the control unit 60, the plurality of first gate drivers 61, the plurality of second gate drivers 62, the plurality of third gate drivers 63, and the plurality of fourth gate drivers 64 are controlled within a predetermined control cycle Ts so that a synthetic vector matches the command voltage vector V*. The synthetic vector is a synthetic vector of: one or more voltage vectors (e.g., the voltage vector V13[P0N] and the voltage vector V7p[P00] in the example shown in FIG. 12A), excluding the two first voltage vectors VV1, out of the plurality of voltage vectors; one first voltage vector VV1; a remaining first voltage vector VV1; the zero vector V0n[NNN]; and the second voltage vector VV2 (e.g., the voltage vector V2[PPN] in the example shown in FIG. 12B) This allows the multi-level inverter 100 according to the first embodiment to maintain the potential at the intermediate potential node M1 (at a substantially constant level) as shown in FIG. 27.

In the multi-level inverter 100 according to the first embodiment, the control unit 60 replaces, when the polarity of a command voltage corresponding to the command voltage vector V* is positive, the first voltage vector VV1 with the zero vector V0n[NNN] and the second voltage vector VV2. In the multi-level inverter 100 according to the first embodiment, the control unit 60 does not replace, when the polarity of a command voltage corresponding to the command voltage vector V* is negative, the first voltage vector VV1 with the zero vector V0n[NNN] and the second voltage vector VV2.

In addition, in the multi-level inverter 100, the control unit 60 controls the plurality of first gate drivers 61, the plurality of second gate drivers 62, the plurality of third gate drivers 63, and the plurality of fourth gate drivers 64 to prevent respective output voltages of the plurality of first bootstrap circuits 71 and the plurality of second bootstrap circuits 72 from decreasing to a predetermined value or less.

Furthermore, in the multi-level inverter 100 according to the first embodiment, the control unit 60 may be configured to determine an operating time in the first control mode and an operating time in the second control mode to equalize an average operating time in the first control mode with an average operating time in the second control mode. For example, if the sum of the overall operating time in the first control mode and the overall operating time in the second control mode is 10 seconds, then the control unit 60 may determine the operating time in the first control mode and the operating time in the second control mode to make the average operating time in the first control mode five seconds and make the average operating time in the second control mode five seconds.

Furthermore, in the multi-level inverter 100 according to the first embodiment, the control unit 60 equalizes, when operating in the third control mode, a first control time (e.g., T0/4 assigned to the voltage vector V8p[PP0] in the example shown in FIG. 25) for which the potential at the intermediate potential node M1 is raised with a second control time (e.g., T0/4 assigned to the voltage vector V8n[00N] in the example shown in FIG. 25) for which the potential at the intermediate potential node M1 is lowered within the control cycle Ts, for example. Alternatively, the first control time and the second control time may have mutually different lengths.

### (4) Advantages

In the multi-level inverter 100 according to the first embodiment, the control unit 60 selects a plurality of (e.g., five) voltage vectors (e.g., voltage vectors V8p[PP0], V8n[00N], V13[P0N], V7p[P00], and V7n[0NN]) adjacent to a command voltage vector V* from a group of (twenty-seven) voltage vectors. Each of the group of voltage vectors is defined by a combination of potential levels at a plurality of the output nodes 13 between the second switching element Q2 and the third switching element Q3 in a plurality of inverter circuits 1. The control unit 60 has: a first control mode in which a potential at the intermediate potential node M1 is raised; a second control mode in which the potential at the intermediate potential node M1 is lowered; and a third control mode in which the potential at the intermediate potential node M1 is maintained. The control unit 60 selects a plurality of voltage vectors (e.g., voltage vectors V8p[PP0], V8n[00N], V13[P0N], V7p[P00], and V7n[0NN]) adjacent to the command voltage vector V* from a group of (twenty-seven) voltage vectors. Each of the group of voltage vectors is defined by a combination of potential levels at a plurality of the output nodes 13. The group of voltage vectors includes a zero vector V0n[NNN] defined by a combination in which all potential levels at the plurality of the output nodes 13 are as high as a potential at the negative electrode N1. In the first control mode, the control unit 60 replaces one first voltage vector VV1, including the potential level at the negative electrode N1 in the combination of the potential levels at the plurality of the output nodes 13, out of two first voltage vectors VV1, belonging to the plurality of voltage vectors, having a reference magnitude, and located closest to the command voltage vector V*, with the zero vector V0n[NNN] and a second voltage vector VV2 having the same direction as, and twice as large a magnitude as, the one first voltage vector VV1. In the first control mode, the control unit 60 controls the plurality of first gate drivers 61, the plurality of second gate drivers 62, the plurality of third gate drivers 63, and the plurality of fourth gate drivers 64 within a predetermined control cycle Ts so that a synthetic vector matches the command voltage vector V*. The synthetic vector is a synthetic vector of: one or more voltage vectors, excluding the two first voltage vectors VV1, out of the plurality of voltage vectors; a remaining first voltage vector VV1 including the potential level at the positive electrode P1 in the combination of the potential levels at the plurality of the output nodes 13 which belong to the two first voltage vectors VV1; the zero vector V0n[NNN]; and the second voltage vector VV2. In the second control mode, the control unit 60 replaces the remaining first voltage vector VV1 with the zero vector V0n[NNN] and the second voltage vector VV2. In the second control mode, the control unit 60 controls the plurality of first gate drivers 61, the plurality of second gate drivers 62, the plurality of third gate drivers 63, and the plurality of fourth gate drivers 64 within the control cycle Ts so that a synthetic vector of: the one or more voltage vectors; the one first voltage vector VV1; the zero vector V0n[NNN]; and the second voltage vector VV2 matches the command voltage vector V*. In the third control mode, the control unit 60 replaces one of the two first voltage vectors VV1 with the zero vector V0n[NNN] and the second voltage vector VV2. In the third control mode, the control unit 60 controls the plurality of first gate drivers 61, the plurality of second gate drivers 62, the plurality of third gate drivers 63, and the plurality of fourth gate drivers 64 within the control cycle Ts so that a synthetic vector of: the one or more voltage vectors; the one first voltage vector VV1; the remaining first voltage vector VV1; the zero vector V0n[NNN]; and the second voltage vector VV2 matches the command voltage vector V*.

This configuration may reduce the chances of causing a voltage drop at the bootstrap circuit and a variation in the potential at the intermediate potential node M1. More specifically, this configuration may reduce the chances of causing a voltage drop at the respective capacitors C17 of the plurality of first bootstrap circuits 71, the respective capacitors C27 of the plurality of second bootstrap circuits 72, and the respective capacitors C37 of the plurality of third bootstrap circuits 73. In addition, this configuration may also reduce the chances of causing a variation in the potential at the intermediate potential node M1, because the control unit 60 has the first control mode in which a potential at the intermediate potential node M1 is raised, the second control mode in which the potential at the intermediate potential node M1 is lowered, and the third control mode in which the potential at the intermediate potential node M1 is maintained.

Also, in the multi-level inverter 100 according to the first embodiment, the control unit 60 determines an operating time in the first control mode and an operating time in the second control mode to equalize an average operating time in the first control mode with an average operating time in the second control mode.

This configuration may make the potential at the intermediate potential node M1 constant.

In a multi-level inverter 100 according to the first embodiment, the control unit 60 equalizes, when operating in the third control mode, a first control time for which the potential at the intermediate potential node M1 is raised with a second control time for which the potential at the intermediate potential node M1 is lowered within the control cycle Ts.

This configuration may make the potential at the intermediate potential node M1 constant.

In the multi-level inverter 100 according to the first embodiment, the DC-DC converter 91 included in the power supply unit 9 supplies a voltage to the plurality of fourth gate drivers 64 and the plurality of third bootstrap circuits 73.

This configuration contributes to downsizing the multi-level inverter 100.

### (Second embodiment)

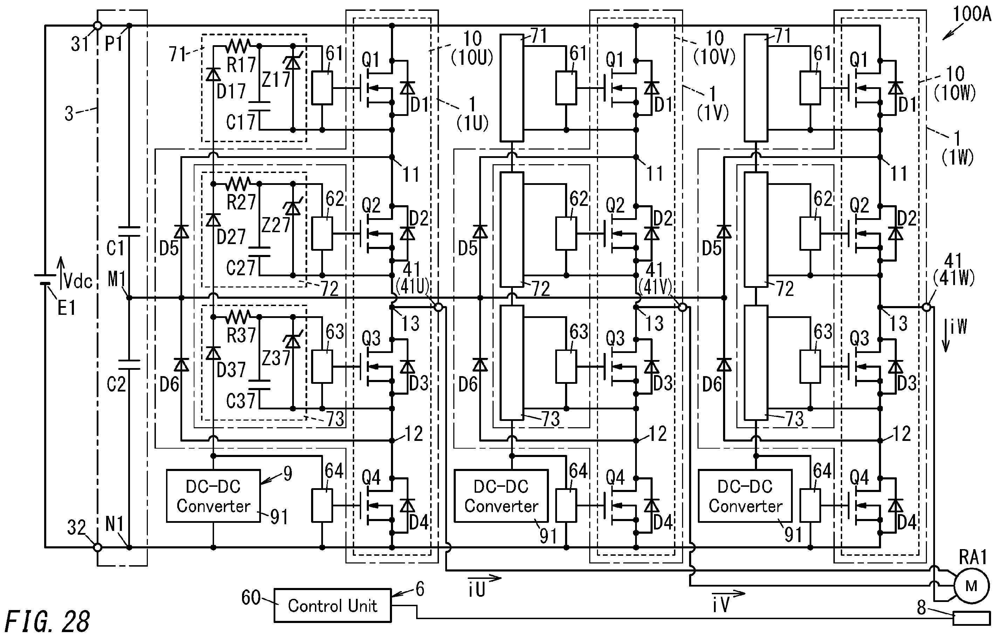

A multi-level inverter 100A according to a second embodiment will be described with reference to FIG. 28. In the following description, any constituent element of the multi-level inverter 100A according to the second embodiment, having the same function as a counterpart of the multi-level inverter 100 (refer to FIG. 1) according to the first embodiment described above, will be designated by the same reference numeral as that counterpart's, and description thereof will be omitted herein.

### (1) Configuration

In the multi-level inverter 100A according to the second embodiment, the power supply unit 9 thereof includes a plurality of (e.g., three) DC-DC converters 91, which is a difference from the multi-level inverter 100 according to the first embodiment.

The plurality of DC-DC converters 91 are provided one to one for the plurality of (e.g., three) fourth gate drivers 64. Each of the plurality of DC-DC converters 91 supplies a voltage to a corresponding one of the fourth gate drivers 64.

In the multi-level inverter 100A according to the second embodiment, in each of the plurality of first bootstrap circuits 71, the anode of the diode D17 is connected to the positive-side terminal of a corresponding one of the plurality of DC-DC converters 91. Also, in each of the plurality of second bootstrap circuits 72, the anode of the diode D27 is connected to the positive-side terminal of a corresponding one of the plurality of DC-DC converters 91. Furthermore, in each of the plurality of third bootstrap circuits 72, the anode of the diode D37 is connected to the positive-side terminal of a corresponding one of the plurality of DC-DC converters 91.

### (2) Operation

The control unit 60 operates in the same way as its counterpart of the first embodiment described above, and therefore, description thereof will be omitted herein.

### (3) Advantages

The multi-level inverter 100A according to the second embodiment, as well as the multi-level inverter 100 according to the first embodiment, may also reduce the chances of causing a voltage drop in the bootstrap circuits (i.e., the plurality of first bootstrap circuits 71, the plurality of second bootstrap circuits 72, and the plurality of third bootstrap circuits 73) and causing a variation in potential at the intermediate potential node M1.

### (Other variations)

Note that the first and second embodiments described above are only exemplary ones of various embodiments of the present disclosure and should not be construed as limiting. Rather, the first and second embodiments may be readily modified in various manners depending on a design choice or any other factor without departing from the scope of the present disclosure.

For example, the plurality of first switching elements Q1, the plurality of second switching elements Q2, the plurality of third switching elements Q3, and the plurality of fourth switching elements Q4 do not have to be MOSFETs but may also be insulated gate bipolar transistors (IGBTs). In that case, in each of the plurality of first switching elements Q1, the plurality of second switching elements Q2, the plurality of third switching elements Q3, and the plurality of fourth switching elements Q4, the control terminal, first main terminal, and second main terminal thereof are a gate terminal, a collector terminal, and an emitter terminal, respectively.

Also, in the multi-level inverters 100 and 100A, the control unit 60 thereof may replace the first voltage vector VV1 with the zero vector V0n[NNN] and the second voltage vector VV2 not only when the polarity of the command voltage corresponding to the command voltage vector V* is positive but also when the polarity of the command voltage corresponding to the command voltage vector V* is negative.

Optionally, in the multi-level inverter 100, 100A, the control unit 60 may also be configured to select any one of the first control mode, the second control mode, or the third control mode according to the potential at the intermediate potential node M1, For example, the control unit 60 may be configured to, by monitoring the potential at the intermediate potential node M1, operate in the first control mode if the potential at the intermediate potential node M1 is less than a first threshold value lower than Vdc/2 and operate in the second control mode if the potential at the intermediate potential node M1 is greater than a second threshold value higher than Vdc/2.

Furthermore, in the embodiments described above, each of the plurality of first bootstrap circuits 71 includes the first resistor R17. Alternatively, each of the plurality of first bootstrap circuits 71 may have a configuration including no first resistors R17. Furthermore, in the embodiments described above, each of the plurality of second bootstrap circuits 72 includes the second resistor R27. Alternatively, each of the plurality of second bootstrap circuits 72 may have a configuration including no second resistors R27. Furthermore, in the embodiments described above, each of the plurality of third bootstrap circuits 73 includes the third resistor R37. Alternatively, each of the plurality of third bootstrap circuits 73 may have a configuration including no third resistors R37.

Each of the plurality of first bootstrap circuits 71 includes the Zener diode Z17 in the embodiments described above but may also have a configuration with no Zener diodes Z17. Each of the plurality of second bootstrap circuits 72 includes the Zener diode Z27 in the embodiments described above but may also have a configuration with no Zener diodes Z27. Each of the plurality of third bootstrap circuits 73 includes the Zener diode Z37 in the embodiments described above but may also have a configuration with no Zener diodes Z37.

Also, the multi-level inverter 100, 100A only needs to be a multi-level inverter with at least three levels and may be, for example, a five-level inverter.

### (Aspects)

The foregoing description provides specific implementations for the following aspects of the present disclosure.

A multi-level inverter (100; 100A) according to a first aspect includes a DC power supply unit (3), a plurality of inverter circuits (1), and a controller (6). The DC power supply unit (3) includes a positive electrode (P1), a negative electrode (N1), and an intermediate potential node (M1). The plurality of inverter circuits (1) are connected between the positive electrode (P1) and the negative electrode (N1) of the DC power supply unit (3). The plurality of inverter circuits (1) are connected between the positive electrode (P1) and the negative electrode (N1) of the DC power supply unit (3). The controller (6) controls the plurality of inverter circuits (1). Each of the plurality of inverter circuits (1) includes a switching circuit (10), a first clamping diode (D5), and a second clamping diode (D6). In the switching circuit (10), a first switching element (Q1), a second switching element (Q2), a third switching element (Q3), and a fourth switching element (Q4) are connected in series to be arranged in line in this order from the positive electrode (P1) toward the negative electrode (N1). The first clamping diode (D5) has its cathode connected to a first connection node (11) between the first switching element (Q1) and the second switching element (Q2) and has its anode connected to the intermediate potential node (M1). The second clamping diode (D6) has its anode connected to a second connection node (12) between the third switching element (Q3) and the fourth switching element (Q4) and has its cathode connected to the intermediate potential node (M1). In the switching circuit (10), an output node (13) is provided between the second switching element (Q2) and the third switching element (Q3). The controller (6) includes a plurality of first gate drivers (61), a plurality of second gate drivers (62), a plurality of third gate drivers (63), a plurality of fourth gate drivers (64), a plurality of first bootstrap circuits (71), a plurality of second bootstrap circuits (72), a plurality of third bootstrap circuits (73), a power supply unit (9), and a control unit (60). Each of the plurality of first gate drivers (61) drives the first switching element (Q1) in a corresponding one of the plurality of inverter circuits (1). Each of the plurality of second gate drivers (62) drives the second switching element (Q2) in a corresponding one of the plurality of inverter circuits (1). Each of the plurality of third gate drivers (63) drives the third switching element (Q3) in a corresponding one of the plurality of inverter circuits (1). Each of the plurality of fourth gate drivers (64) drives the fourth switching element (Q4) in a corresponding one of the plurality of inverter circuits (1). The plurality of first bootstrap circuits (71) are connected to the plurality of first gate drivers (61), respectively. The plurality of second bootstrap circuits (72) are connected to the plurality of second gate drivers (62), respectively. The plurality of third bootstrap circuits (73) are connected to the plurality of third gate drivers (63), respectively. The power supply unit (9) supplies a voltage to the plurality of fourth gate drivers (64). The control unit (60) has: a first control mode in which a potential at the intermediate potential node (M1) is raised; a second control mode in which the potential at the intermediate potential node (M1) is lowered; and a third control mode in which the potential at the intermediate potential node (M1) is maintained. The control unit (60) selects a plurality of voltage vectors adjacent to a command voltage vector (V*) from a group of voltage vectors. Each of the group of voltage vectors is defined by a combination of potential levels at a plurality of the output nodes (13). The group of voltage vectors includes a zero vector (V0n[NNN]) defined by a combination in which all potential levels at the plurality of the output nodes (13) are as high as a potential at the negative electrode (N1). In the first control mode, the control unit (60) replaces one first voltage vector (VV1) out of two first voltage vectors (VV1) with the zero vector (V0n[NNN]) and a second voltage vector (VV2). The two first voltage vectors (VV1) belong to the plurality of voltage vectors, have a reference magnitude, and are located closest to the command voltage vector (V*). The one first voltage vector (VV1) includes the potential level at the negative electrode (N1) in the combination of the potential levels at the plurality of the output nodes (13). The second voltage vector (VV2) has the same direction as, and twice as large a magnitude as, the one first voltage vector (VV1). In the first control mode, the control unit (60) controls the plurality of first gate drivers (61), the plurality of second gate drivers (62), the plurality of third gate drivers (63), and the plurality of fourth gate drivers (64) within a predetermined control cycle (Ts) so that a synthetic vector matches the command voltage vector (V*). The synthetic vector is a synthetic vector of: one or more voltage vectors, excluding the two first voltage vectors (VV1), out of the plurality of voltage vectors; a remaining first voltage vector (VV1) including the potential level at the positive electrode (P1) in the combination of the potential levels at the plurality of the output nodes (13) which belong to the two first voltage vectors (VV1); the zero vector (V0n[NNN]); and the second voltage vector (VV2). In the second control mode, the control unit (60) replaces the remaining first voltage vector (VV1) with the zero vector (V0n[NNN]) and the second voltage vector (VV2). In the second control mode, the control unit (60) controls the plurality of first gate drivers (61), the plurality of second gate drivers (62), the plurality of third gate drivers (63), and the plurality of fourth gate drivers (64) within the control cycle (Ts) so that a synthetic vector matches the command voltage vector (V*). The synthetic vector is a synthetic vector of: the one or more voltage vectors; the one first voltage vector (VV1); the zero vector (V0n[NNN]); and the second voltage vector (VV2). In the third control mode, the control unit (60) controls the plurality of first gate drivers (61), the plurality of second gate drivers (62), the plurality of third gate drivers (63), and the plurality of fourth gate drivers (64) within the control cycle (Ts) so that a synthetic vector matches the command voltage vector (V*). The synthetic vector is a synthetic vector of: the one or more voltage vectors; the one first voltage vector (VV1); the remaining first voltage vector (VV1); the zero vector (V0n[NNN]); and the second voltage vector (VV2).

This aspect may reduce the chances of causing a voltage drop at the bootstrap circuit and a variation in the potential at the intermediate potential node (M1). More specifically, this aspect may reduce the chances of causing a voltage drop at the respective capacitors (C17) of the plurality of first bootstrap circuits (71), the respective capacitors (C27) of the plurality of second bootstrap circuits (72), and the respective capacitors (C37) of the plurality of third bootstrap circuits (72). In addition, this aspect may also reduce the chances of causing a variation in the potential at the intermediate potential node (M1), because the control unit (60) has the first control mode, the second control mode, and the third control mode.

In a multi-level inverter (100; 100A) according to a second aspect, which may be implemented in conjunction with the first aspect, the control unit (60) determines an operating time in the first control mode and an operating time in the second control mode to equalize an average operating time in the first control mode with an average operating time in the second control mode.

This aspect may make the potential at the intermediate potential node (M1) constant.

In a multi-level inverter (100; 100A) according to a third aspect, which may be implemented in conjunction with the first or second aspect, the control unit (60) equalizes, when operating in the third control mode, a first control time for which the potential at the intermediate potential node (M1) is raised with a second control time for which the potential at the intermediate potential node (M1) is lowered within the control cycle (Ts).

This aspect may make the potential at the intermediate potential node (M1) constant.

In a multi-level inverter (100; 100A) according to a fourth aspect, which may be implemented in conjunction with any one of the first to third aspects, the control unit (60) replaces, when the polarity of a command voltage corresponding to the command voltage vector (V*) is positive, the first voltage vector (VV1) with the zero vector (V0n[NNN]) and the second voltage vector (VV2).

This aspect may reduce the number of times the first voltage vector (VV1) is replaced with the zero vector (V0n[NNN]) and the second voltage vector (VV2).

In a multi-level inverter (100; 100A) according to a fifth aspect, which may be implemented in conjunction with any one of the first to fourth aspects, the control unit (60) controls the plurality of first gate drivers (61), the plurality of second gate drivers (62), the plurality of third gate drivers (63), and the plurality of fourth gate drivers (64) to prevent respective output voltages of the plurality of first bootstrap circuits (71) and the plurality of second bootstrap circuits (72) from decreasing to a predetermined value or less.

This aspect allows for preventing respective output voltages of the plurality of first bootstrap circuits (71) and the plurality of second bootstrap circuits (72) from decreasing to a predetermined value or less.

In a multi-level inverter (100; 100A) according to a sixth aspect, which may be implemented in conjunction with any one of the first to fifth aspects, each of the plurality of first bootstrap circuits (71) and the plurality of second bootstrap circuits (72) includes a capacitor (C17) and a diode (D17). The diode (D17) is connected to the capacitor (C17) in series.

In a multi-level inverter (100; 100A) according to a seventh aspect, which may be implemented in conjunction with the sixth aspect, each of the plurality of first bootstrap circuits (71) and the plurality of second bootstrap circuits (72) further includes a resistor (R17). The resistor (R17) is connected to the capacitor (C17) in series.

In a multi-level inverter (100) according to an eighth aspect, which may be implemented in conjunction with any one of the first to seventh aspects, the power supply unit (9) includes a DC-DC converter (91). The DC-DC converter (91) supplies a voltage to the plurality of fourth gate drivers (64) and the plurality of third bootstrap circuits (73).

This aspect contributes to downsizing the multi-level inverter (100).

### Reference Signs List

- 1: Inverter Circuit
- 3: DC Power Supply Unit
- 6: Controller
- 60: Control Unit
- 61: First Gate Driver
- 62: Second Gate Driver
- 63: Third Gate Driver
- 64: Fourth Gate Driver
- 9: Power Supply Unit
- 91: DC-DC Converter
- 10: Switching Circuit
- 11: First Connection Node
- 12: Second Connection Node
- 13: Output Node (Third Connection Node)
- 71: First Bootstrap Circuit
- 72: Second Bootstrap Circuit
- 73: Third Bootstrap Circuit
- 100, 100A: Multi-Level Inverter
- C17, C27, C37: Capacitor
- D1: First Diode
- D2: Second Diode
- D3: Third Diode
- D4: Fourth Diode
- D5: First Clamping Diode
- D6: Second Clamping Diode
- D17, D27, D37: Diode
- P1: Positive Electrode
- Q1: First Switching Element
- Q2: Second Switching Element
- Q3: Third Switching Element
- Q4: Fourth Switching Element
- M1: Intermediate Potential Node
- N1: Negative Electrode
- R17, R27, R37: Resistor
- Ts: Control Cycle
- V0-V18: Voltage Vector
- V*: Command Voltage Vector
- VV1: First Voltage Vector
- VV2: Second Voltage Vector

## Claims

1. A multi-level inverter comprising:
a DC power supply unit including a positive electrode, a negative electrode, and an intermediate potential node;
a plurality of inverter circuits connected between the positive electrode and the negative electrode of the DC power supply unit; and
a controller configured to control the plurality of inverter circuits,
each of the plurality of inverter circuits including:
a switching circuit in which a first switching element, a second switching element, a third switching element, and a fourth switching element are connected in series to be arranged in line in this order from the positive electrode toward the negative electrode;
a first clamping diode, of which a cathode is connected to a first connection node between the first switching element and the second switching element and of which an anode is connected to the intermediate potential node; and
a second clamping diode, of which an anode is connected to a second connection node between the third switching element and the fourth switching element and of which a cathode is connected to the intermediate potential node; and
an output node being provided between the second switching element and the third switching element,
the controller including:
a plurality of first gate drivers, each of the plurality of first gate drivers being configured to drive the first switching element in a corresponding one of the plurality of inverter circuits;
a plurality of second gate drivers, each of the plurality of second gate drivers being configured to drive the second switching element in a corresponding one of the plurality of inverter circuits;
a plurality of third gate drivers, each of the plurality of third gate drivers being configured to drive the third switching element in a corresponding one of the plurality of inverter circuits;
a plurality of fourth gate drivers, each of the plurality of fourth gate drivers being configured to drive the fourth switching element in a corresponding one of the plurality of inverter circuits;
a plurality of first bootstrap circuits connected to the plurality of first gate drivers, respectively;
a plurality of second bootstrap circuits connected to the plurality of second gate drivers, respectively;
a plurality of third bootstrap circuits connected to the plurality of third gate drivers, respectively;
a power supply unit configured to supply a voltage to the plurality of fourth gate drivers; and
a control unit having: a first control mode in which a potential at the intermediate potential node is raised; a second control mode in which the potential at the intermediate potential node is lowered; and a third control mode in which the potential at the intermediate potential node is maintained,
the control unit being configured to select a plurality of voltage vectors adjacent to a command voltage vector from a group of voltage vectors, each of the group of voltage vectors being defined by a combination of potential levels at a plurality of the output nodes,
the group of voltage vectors including a zero vector defined by a combination in which all potential levels at the plurality of the output nodes are as high as a potential at the negative electrode,
in the first control mode, the control unit being configured to:
replace one first voltage vector out of two first voltage vectors with the zero vector and a second voltage vector, the two first voltage vectors belonging to the plurality of voltage vectors, having a reference magnitude, and being located closest to the command voltage vector, the one first voltage vector including the potential level at the negative electrode in the combination of the potential levels at the plurality of the output nodes, the second voltage vector having the same direction as, and twice as large a magnitude as, the one first voltage vector; and
control the plurality of first gate drivers, the plurality of second gate drivers, the plurality of third gate drivers, and the plurality of fourth gate drivers within a predetermined control cycle so that a synthetic vector matches the command voltage vector, the synthetic vector being a synthetic vector of: one or more voltage vectors, excluding the two first voltage vectors, out of the plurality of voltage vectors; a remaining first voltage vector including the potential level at the positive electrode in the combination of the potential levels at the plurality of the output nodes which belong to the two first voltage vectors; the zero vector; and the second voltage vector,
in the second control mode, the control unit being configured to:
replace the remaining first voltage vector with the zero vector and the second voltage vector; and
control the plurality of first gate drivers, the plurality of second gate drivers, the plurality of third gate drivers, and the plurality of fourth gate drivers within the control cycle so that a synthetic vector matches the command voltage vector, the synthetic vector being a synthetic vector of: the one or more voltage vectors; the one first voltage vector; the zero vector; and the second voltage vector, and
in the third control mode, the control unit being configured to:
control the plurality of first gate drivers, the plurality of second gate drivers, the plurality of third gate drivers, and the plurality of fourth gate drivers within the control cycle so that a synthetic vector matches the command voltage vector, the synthetic vector being a synthetic vector of: the one or more voltage vectors; the one first voltage vector; the remaining first voltage vector; the zero vector; and the second voltage vector.

2. The multi-level inverter of claim 1, wherein
the control unit is configured to determine an operating time in the first control mode and an operating time in the second control mode to equalize an average operating time in the first control mode with an average operating time in the second control mode.

3. The multi-level inverter of claim 1 or 2, wherein
the control unit is configured to, when operating in the third control mode, equalize a first control time for which the potential at the intermediate potential node is raised with a second control time for which the potential at the intermediate potential node is lowered within the control cycle.

4. The multi-level inverter of any one of claims 1 to 3, wherein
the control unit is configured to, when polarity of a command voltage corresponding to the command voltage vector is positive, replace the first voltage vector with the zero vector and the second voltage vector.

5. The multi-level inverter of any one of claims 1 to 4, wherein
the control unit is configured to control the plurality of first gate drivers, the plurality of second gate drivers, the plurality of third gate drivers, and the plurality of fourth gate drivers to prevent respective output voltages of the plurality of first bootstrap circuits and the plurality of second bootstrap circuits from decreasing to a predetermined value or less.

6. The multi-level inverter of any one of claims 1 to 5, wherein
each of the plurality of first bootstrap circuits and the plurality of second bootstrap circuits includes:
a capacitor; and
a diode connected to the capacitor in series.

7. The multi-level inverter of claim 6, wherein
each of the plurality of first bootstrap circuits and the plurality of second bootstrap circuits further includes a resistor connected to the capacitor in series.

8. The multi-level inverter of any one of claims 1 to 7, wherein
the power supply unit includes a DC-DC converter configured to supply a voltage to the plurality of fourth gate drivers and the plurality of third bootstrap circuits.
